# EUROPEAN PATENT APPLICATION

(11) **EP 4 529 270 A1**
(43) Date of publication of application: **26.03.2025**
(21) Application number: 23841995.6
(22) Date of filing: 20.06.2023
(51) Int. Cl.: H04W 36/00

(54) **METHOD AND APPARATUS FOR POSITIONING**

(30) Priority: 22.07.2022 CN 202210867807
(71) Applicant: Huawei Technologies Co., Ltd., Shenzhen, Guangdong 518129 (CN)
(72) Inventor: JIA, Jianxin, Shenzhen, Guangdong 518129 (CN); WU, Wenfu, Shenzhen, Guangdong 518129 (CN); ZONG, Zaifeng, Shenzhen, Guangdong 518129 (CN); LI, Guanglei, Shenzhen, Guangdong 518129 (CN); HU, Xiaodong, Shenzhen, Guangdong 518129 (CN)
(74) Representative: Goddar, Heinz J.
(86) International application number: PCT/CN2023/101277
(87) International publication number: WO 2024/016929

(57) **Abstract**

Embodiments of this application provide a positioning method and apparatus. The method includes: A first device receives, in a first system, a first trigger message for starting a positioning procedure. If the first device detects a first event, and the first device access a second system or moves to the second system, the first device sends a first message applicable to the second system. In addition, the first message includes location QoS applicable to the second system. According to this method, a device in the second system can recognize the first message and first location QoS, so that the device in the second system can continue a location service, to maintain continuity of the location service.

## Description

This application claims priority to Chinese Patent Application No. 202210867807.X, filed with the China National Intellectual Property Administration on July 22, 2022 and entitled "POSITIONING METHOD AND APPARATUS", which is incorporated herein by reference in its entirety.

### TECHNICAL FIELD

Embodiments of this application relate to the communication field, and more specifically, to a positioning method and apparatus.

### BACKGROUND

With rising of an intelligence wave, a requirement of the vertical industry for positioning is increasingly urgent. A positioning function of a 5th generation (5th generation, 5G) base station is introduced in the 3rd generation partnership project (3rd generation partnership project, 3GPP) release (Release) 16, so that a terminal device can be positioned in a 5G system (5G system, 5GS). In an evolved packet system (evolved packet system, EPS), a terminal device can also be positioned. However, there are significant differences between 5GS and EPS positioning procedures.

In the current protocol standard, continuity of the 5GS and EPS positioning procedures is not considered. When a terminal device performs mobility handover between the 5GS and the EPS, due to a difference between the 5GS and EPS positioning procedures, a location service is interrupted or fails after the handover, causing a positioning delay and network resource overheads.

In the foregoing mobility handover scenario, how to ensure continuity of the location service is an urgent problem to be resolved.

### SUMMARY

Embodiments of this application provide a positioning method and apparatus, so that a terminal device can report a proper message type and use the message type to carry a proper LCS QoS class in a handover scenario, to ensure continuity of a location service.

According to a first aspect, a positioning method is provided. The method may be performed by a first device. The first device may be a component (for example, a circuit, a chip, or a chip system) or the like configured in the first device. This is not limited in this application.

The method includes: A first device receives a first trigger message in a first system, where the first trigger message is for requesting the first device to start a periodic or deferred reporting procedure. The first device detects a first event. The first device sends a first message if the first device determines that at least one of the following conditions is satisfied: the first device accesses a second system, and the first device moves to the second system. The first message is used by the first device to initiate a positioning event or initiate positioning. The first message includes first location QoS. The first location QoS is applicable to the second system.

According to the foregoing solution, the first device receives, in the first system, the first trigger message for starting a positioning procedure. If the first device detects the first event, and the first device access the second system or moves to the second system, the first device sends the first message applicable to the second system. In addition, the first message includes location QoS applicable to the second system. In this way, a device in the second system can recognize the first message and the first location QoS, so that the second system can continue to perform a location service on the device, to maintain continuity of the location service.

In addition, according to this method, an interruption or a failure that is of the location service and that is caused because the first device is handed over from the first system to the second system can be avoided, so that a positioning delay and network resource overheads that are unnecessary are not generated.

Specifically, the first device detects the first event after receiving the first trigger message in the first system. The first device sends the first message if the first device determines that at least one of the following conditions is satisfied: the first device accesses the second system, and the first device moves to the second system. The first trigger message is for requesting the first device to start the positioning procedure. The first event is used by the first device to report location information. The first message includes the location information.

The first event may be understood as that the first device reports, after detecting that the first event is triggered, the first message related to positioning, or the first device reports the first message after detecting that the first event is triggered, where the first message is a message related to positioning.

Optionally, "used by the first device to..." may also be understood as "used in the first device...".

With reference to the first aspect, in some implementations of the first aspect, the first system is a 5th generation system, and the second system is an evolved packet system. The first message is a location request message or a location request invoke message initiated by a mobile device.

With reference to the first aspect, in some implementations of the first aspect, the first location QoS corresponds to second location QoS, and the second location QoS includes a multiple QoS class.

With reference to the first aspect, in some implementations of the first aspect, the method further includes: The first device receives the first location QoS from a first network element. The first network element is a location management function network element, an access management network element, a gateway mobile location center network element, or a network exposure function network element.

According to the foregoing solution, the first device may obtain the first location QoS corresponding to the second location QoS and applicable to the second system, so that the first device can report location QoS applicable to the second system.

With reference to the first aspect, in some implementations of the first aspect, the method further includes: The first device receives third location QoS from the first network element, where the third location QoS is applicable to the first system.

According to the foregoing solution, the first location QoS may further obtain location QoS applicable to the first system, so that in a continuous handover scenario between the 5th generation system and the evolved packet system, the first device can select, based on a type of a system to which the first device is handed over, to report a message and location QoS that are applicable to the corresponding system. In this way, continuity of a location service in the continuous handover scenario can be supported.

With reference to the first aspect, in some implementations of the first aspect, the third location QoS includes a QoS class in the second location QoS. Alternatively, the third location QoS includes horizontal accuracy and vertical accuracy in the second location QoS.

With reference to the first aspect, in some implementations of the first aspect, the first system is an evolved packet system, and the second system is a 5th generation system. The first message is used by the first device to report a periodic or triggered positioning event.

It should be understood that the 5th generation system in this application may be referred to as a 5th generation communication system. The evolved packet system may be referred to as a 4th generation communication system.

With reference to the first aspect, in some implementations of the first aspect, the first message is an event report.

With reference to the first aspect, in some implementations of the first aspect, the first location QoS is carried in the first trigger message.

With reference to the first aspect, in some implementations of the first aspect, the first trigger message is a periodic-triggered invoke request message or a periodic-triggered event invoke message.

With reference to the first aspect, in some implementations of the first aspect, the method further includes: The first device obtains first information, where the first information indicates that the first device moves to the second system.

According to the foregoing solution, the first device may determine, based on the first information, whether at least one of the foregoing conditions is satisfied, and further determine a message type and location QoS that are reported.

With reference to the first aspect, in some implementations of the first aspect, the first information is from an access management network element or a mobility management entity, or from an access network device in the second system.

With reference to the first aspect, in some implementations of the first aspect, the first location QoS includes a best effort class or an assured class.

Specifically, a QoS class included in the first location QoS is a QoS class that can be identified in the second system.

With reference to the first aspect, in some implementations of the first aspect, that the first device sends a first message if the first device moves to the second system includes: After the first device is completely handed over, the first device sends the first message.

According to the foregoing solution, if the first device detects the first event in a handover process, the first device may report, after the handover is completed, the first message to a system to which the first device is handed over, so that an extra handover delay can be avoided when continuity of a location service is ensured.

With reference to the first aspect, in some implementations of the first aspect, that the first device sends a first message includes: The first device sends the first message after a timer expires (expire). The timer is started when the first device detects the first event or after the first device receives the first trigger message.

According to a second aspect, a positioning method is provided. The method may be performed by a first network element. The first network element may be a component (for example, a circuit, a chip, or a chip system) or the like configured in the first network element. This is not limited in this application.

The method includes: A first network element receives a second message. The second message is for requesting a location of a first device. The second message includes second location QoS. The second location QoS includes a multiple QoS class. The first network element belongs to a first system. If the first network element determines that an access type allowed by the first device for event reporting includes an access type of a second system, the first network element sends first location QoS to the first device. The first location QoS is applicable to the second system. The first location QoS corresponds to the second location QoS.

According to the foregoing solution, the first network element may provide the first location QoS for the first device, so that when the first device detects a first event for triggering reporting of an event report and the first device accesses an evolved packet system or moves to the evolved packet system, the first device may send location QoS applicable to the evolved packet system. In other words, the method can support maintaining continuity of a location service, to avoid an interruption or a failure that is of the location service and that is caused because the first device is handed over from the first system to the second system.

With reference to the second aspect, in some implementations of the second aspect, the first network element is a location management function network element. That the first network element sends first location QoS to the first device includes: The location management function network element sends the first location QoS to an access management network element.

Specifically, the location management function network element sends the first location QoS to the access management network element, so that the access management network element sends the first location QoS to the first device.

With reference to the second aspect, in some implementations of the second aspect, the first network element is an access management network element. That the first network element sends first location QoS to the first device includes: The access management network element sends the first location QoS to an access network device in the first system.

With reference to the second aspect, in some implementations of the second aspect, the method further includes: The access management network element sends the first location QoS to a gateway mobile location center network element.

According to the foregoing solution, after the first device accesses the second system, the gateway mobile location center network element may continue to perform a periodic/deferred location service by using the first location QoS, to ensure continuity of the location service.

With reference to the second aspect, in some implementations of the second aspect, the method further includes: The access management network element sends first information to the first device, where the first information indicates that the first device moves to the second system; and/or the access management network element sends second information to the gateway mobile location center network element, where the second information indicates that the first device moves to the second system.

According to the foregoing solution, the access management network element may indicate, to the first device and/or the gateway mobile location center network element, that the first device moves to the second system, so that the first device and/or the gateway mobile location center network element can determine a subsequent processing procedure based on a handover status of the first device, to help ensure the continuity of the location service.

For example, the first device may learn, based on the first information, that the first device moves to the evolved packet system, so that the first device sends, to the access management network element when detecting the first event, the first message applicable to the evolved packet system.

For another example, the gateway mobile location center network element may learn, based on the second information, that the first device moves to the evolved packet system. Subsequently, the gateway mobile location center network element may continue a periodic/triggered location service in the evolved packet system, and may indicate a 5th generation system to release a resource related to the periodic/triggered location service.

Optionally, that the access management network element sends second information to the gateway mobile location center network element includes: The access management network element determines that the first device has positioning information; and the access management network element sends the second information to the gateway mobile location center network element if the access management network element determines that at least one of the following conditions is satisfied: the first device accesses the second system, and the first device moves to the second system.

With reference to the second aspect, in some implementations of the second aspect, the method further includes: The access management network element obtains third information, where the third information indicates that the first device is handed over from the first system to the second system.

With reference to the second aspect, in some implementations of the second aspect, the first network element is a network exposure function network element. That the first network element sends first location QoS to the first device includes: The network exposure function network element sends the first location QoS to a gateway mobile location center network element.

Specifically, the network exposure function network element sends the first location QoS to the gateway mobile location center network element, so that the gateway mobile location center network element sends the first location QoS to the first device.

With reference to the second aspect, in some implementations of the second aspect, the first network element is a gateway mobile location center network element. That the first network element sends first location QoS to the first device includes: The gateway mobile location center network element sends the first location QoS to an access management network element.

Specifically, the gateway mobile location center network element sends the first location QoS to the access management network element, so that the access management network element sends the first location QoS to the first device.

With reference to the second aspect, in some implementations of the second aspect, the method further includes: The gateway mobile location center network element stores the first location QoS.

According to the foregoing solution, after the gateway mobile location center network element stores the first location QoS, when the first device accesses the second system, the gateway mobile location center network element may continue to perform a periodic or deferred location service by using the first location QoS, to ensure continuity of the location service.

With reference to the second aspect, in some implementations of the second aspect, the method further includes: The first network element sends third location QoS to the first device, where the third location QoS is applicable to the first system.

According to the foregoing solution, the first network element may send, to the first device, location QoS applicable to the 5th generation system. When the first device is handed over between the 5th generation system and the evolved packet system, for example, the first device moves from the 5th generation system to the evolved packet system and then moves to the 5th generation system, the first device may select, based on a type of a system to which the first device is handed over, to report a message and location QoS that are applicable to the corresponding system. In this way, continuity of a location service in a continuous handover scenario can be supported.

With reference to the second aspect, in some implementations of the second aspect, the third location QoS includes a QoS class in the second location QoS. Alternatively, the third location QoS includes horizontal accuracy and vertical accuracy in the second location QoS.

With reference to the second aspect, in some implementations of the second aspect, the method further includes: The first network element determines the first location QoS based on the second location QoS.

According to the foregoing solution, the first network element may determine, based on the second location QoS, the first location QoS applicable to the evolved packet system, to send the first location QoS to the first device.

With reference to the second aspect, in some implementations of the second aspect, that the first network element determines the first location QoS based on the second location QoS includes: The first network element selects horizontal accuracy and vertical accuracy from the second location QoS, and sets a QoS class of the first location QoS to a QoS class applicable to the second system.

With reference to the second aspect, in some implementations of the second aspect, the QoS class applicable to the second system includes a best effort class or an assured class.

With reference to the second aspect, in some implementations of the second aspect, that the first network element determines the first location QoS based on the second location QoS includes: The first network element selects horizontal accuracy and vertical accuracy that have highest priorities from the second location QoS, and sets the QoS class of the first location QoS to a best effort class. Alternatively, the first network element selects horizontal accuracy and vertical accuracy that have lowest priorities from the second location QoS, and sets the QoS class of the first location QoS to an assured class.

According to the foregoing solution, the first network element may select accuracy from the second location QoS and set a proper QoS class as the first location QoS, to help ensure positioning accuracy in a handover scenario.

According to a third aspect, a positioning method is provided. The method may be performed by a mobility management entity. The mobility management entity may be a component (for example, a circuit, a chip, or a chip system) or the like configured in the mobility management entity. This is not limited in this application.

The method includes: A mobility management entity determines that a first device has positioning information. The mobility management entity sends fourth information to a gateway mobile location center network element if the mobility management entity determines that at least one of the following conditions is satisfied: the first device accesses a second system, and the first device moves to the second system. The fourth information indicates that the first device moves to the second system.

According to the foregoing solution, when the mobility management entity determines that the first device has the positioning information, and determines that the first device accesses or moves to the second system, the mobility management entity indicates, to the gateway mobility location center network element, that the first device moves to the second system. In this way, the gateway mobile location center network element may learn that the first device moves to a 5th generation system. Subsequently, the gateway mobile location center network element may continue a periodic or triggered location service in the 5th generation system, to help ensure continuity of the location service.

In addition, after learning that the first device moves to the 5th generation system, the gateway mobile location center network element may indicate an evolved packet system to release a resource related to the periodic or triggered location service, to help use a network resource more properly.

With reference to the third aspect, in some implementations of the third aspect, the method further includes: The mobility management entity sends first information to the first device. The first information indicates that the first device moves to the second system.

With reference to the third aspect, in some implementations of the third aspect, that the mobility management entity sends fourth information to a gateway mobile location center network element if the first device moves to the second system includes: When the mobility management entity receives a forward relocation complete notification message, the mobility management entity sends the fourth information to the gateway mobile location center network element.

According to a fourth aspect, a positioning method is provided. The method includes: A gateway mobile location center network element in a first system obtains first location QoS, where the first location QoS is applicable to a second system. The gateway mobile location center network element in the first system sends the first location QoS to a gateway mobile location center network element in the second system.

With reference to the fourth aspect, in some implementations of the fourth aspect, the method further includes: The gateway mobile location center network element in the first system receives sixth information, where the sixth information indicates that the first device moves to the second system.

With reference to the fourth aspect, in some implementations of the fourth aspect, the first system is a 5th generation system, the second system is an evolved packet system, and the sixth information is second information.

Optionally, the second information is from an access management network element.

Optionally, the gateway mobile location center network element in the first system is a 5th generation core network-gateway mobile location center network element, and the gateway mobile location center network element in the second system is an evolved packet core network-gateway mobile location center network element.

With reference to the fourth aspect, in some implementations of the fourth aspect, the method further includes: The gateway mobile location center network element in the 5th generation system sends, to the gateway mobile location center network element in the evolved packet system, identification information of a mobility management entity.

With reference to the fourth aspect, in some implementations of the fourth aspect, the first system is an evolved packet system, the second system is a 5th generation system, and the sixth information is fourth information.

Optionally, the fourth information is from a mobility management entity.

Optionally, the gateway mobile location center network element in the first system is an evolved packet core network-gateway mobile location center network element, and the gateway mobile location center network element in the second system is a 5th generation core network-gateway mobile location center network element.

With reference to the fourth aspect, in some implementations of the fourth aspect, the method further includes: The gateway mobile location center network element in the evolved packet system sends, to the gateway mobile location center network element in the 5th generation system, identification information of an access management network element.

According to a fifth aspect, a communication apparatus is provided. The communication apparatus has a function of implementing the method in any one of the first aspect to the fourth aspect or any possible implementation of the first aspect to the fourth aspect. The function may be implemented by hardware, or may be implemented by hardware executing corresponding software. The hardware or the software includes one or more units corresponding to the foregoing functions.

According to a sixth aspect, a communication apparatus is provided, including a processor and a memory. Optionally, the communication apparatus may further include a transceiver. The memory is configured to store a computer program. The processor is configured to invoke and run the computer program stored in the memory, and control the transceiver to receive and send a signal, to enable the communication apparatus to perform the method in any one of the first aspect to the fourth aspect or any possible implementation of the first aspect to the fourth aspect.

According to a seventh aspect, a communication apparatus is provided, including a processor and a communication interface. The communication interface is configured to receive data and/or information, and transmit the received data and/or information to the processor. The processor processes the data and/or information. The communication interface is further configured to output data and/or information obtained through processing by the processor, so that the method in any one of the first aspect to the fourth aspect or any possible implementation of the first aspect to the fourth aspect is performed.

According to an eighth aspect, a computer-readable storage medium is provided. The computer-readable storage medium stores computer instructions. When the computer instructions are run on a computer, the method in any one of the first aspect to the fourth aspect or any possible implementation of the first aspect to the fourth aspect is performed.

According to a ninth aspect, a computer program product is provided. The computer program product includes computer program code. When the computer program code is run on a computer, the method in any one of the first aspect to the fourth aspect or any possible implementation of the first aspect to the fourth aspect is performed.

### BRIEF DESCRIPTION OF DRAWINGS

FIG. 1 shows a network architecture applicable to an embodiment of this application;
FIG. 2 shows another network architecture applicable to an embodiment of this application;
FIG. 3 is a diagram of a network architecture of interaction between 5G and 4G according to an embodiment of this application;
FIG. 4 is a diagram of another network architecture of interaction between 5G and 4G according to an embodiment of this application;
FIG. 5 is a diagram of a positioning method 200 according to an embodiment of this application;
FIG. 6 is a diagram of a positioning method 300 according to an embodiment of this application;
FIG. 7 is a diagram of a positioning method 400 according to an embodiment of this application;
FIG. 8 is a diagram of a positioning method 500 according to an embodiment of this application;
FIG. 9 is a diagram of a positioning method 600 according to an embodiment of this application;
FIG. 10 is a diagram of a positioning method 700 according to an embodiment of this application;
FIG. 11 is a diagram of a positioning method 800 according to an embodiment of this application;
FIG. 12 is a diagram of a positioning method 900 according to an embodiment of this application;
FIG. 13 is a diagram of a positioning apparatus 1000 according to an embodiment of this application; and
FIG. 14 is a diagram of a positioning apparatus 1100 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, or another evolved communication system.

The technical solutions provided in this application may alternatively be applied to a future communication system, such as a sixth generation mobile communication system. This is not limited in this application.

The technical solutions provided in this application may alternatively be applied to machine type communication (machine type communication, MTC), a long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as a vehicle-to-everything (vehicle-to-X, V2X, where X can represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-vehicle, V2P) communication, and vehicle-to-network (vehicle-to-network, V2N) communication.

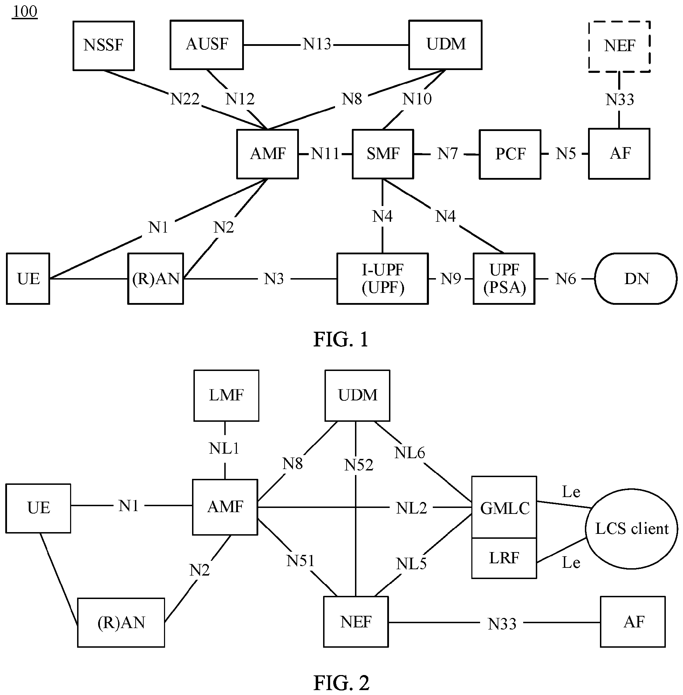

For example, FIG. 1 is a diagram of a network architecture applicable to an embodiment of this application. As shown in FIG. 1, a 5G system (5th generation system, 5GS) is used as an example of the network architecture. The network architecture may include but is not limited to: a network slice selection function (network slice selection function, NSSF), an authentication server function (authentication server function, AUSF), unified data management (unified data management, UDM), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be an internet. The NSSF, the AUSF, the UDM, the NEF, the NRF, the PCF, the AF, the AMF, the SMF and the UPF are network elements in a core network. Because the 5G system is used as an example in FIG. 1, the core network may be referred to as a 5G core network (5G core network, 5GC or 5GCN).

The following briefly describes network elements shown in FIG. 1.
1. User equipment (user equipment, UE): may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication capability, a computing device or another processing device connected to a wireless modem, a wearable device, a terminal device in a 5G network, a terminal device in a future evolved public land mobile network (public land mobile network, PLMN), and the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-function, large-size, and complete or partial functions that can be implemented without depending on a smartphone, for example, a smartwatch or smart glasses, and focuses on only a type of application function and needs to be used with another device such as a smartphone, for example, various smart bands and smart jewelry that perform physical sign monitoring.

In addition, the terminal device in embodiments of this application may alternatively be user equipment in an IoT system. An IoT is an important part of future development of information technologies. A main technical feature of the IoT is connecting a thing to a network through a communication technology, to implement an intelligent network for interconnection between a person and a machine or between one thing and another.

It should be noted that a terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of a terminal device may be a terminal device, or may be an apparatus that can support a terminal device in implementing the function, for example, a chip system or a chip. The apparatus may be installed in the terminal device. In this embodiment of this application, the chip system may include a chip, or may include a chip and another discrete component.

2. (Radio) access network ((radio) access network, (R)AN) device: may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in a 5G system is referred to as a next generation base station node (next generation Node Base station, gNB) or a next generation radio access network (next generation radio access network NG-RAN) device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like. The AN device may allow interconnection and interworking between a terminal device and a 3GPP core network by using the non-3GPP technology.

The AN device can be responsible for functions such as radio resource management, quality of service (quality of service, QoS) management, data compression, and encryption on an air interface side. The AN device provides an access service for the terminal device, to complete forwarding of a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission reception point (transmission reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next-generation 6G communication system. Neither of a specific technology and a specific device form used for the AN device is limited in embodiments of this application.

3. Access management network element: is mainly for functions such as access control, mobility management, and attachment and detachment.

In a 5G communication system, the access management network element may be an access and mobility management function (access and mobility management function, AMF) network element. In a future communication system, the access management network element may still be the AMF network element, or may have another name. This is not limited in this application.

4. Session management network element: is mainly used for user plane network element selection, user plane network element relocation, internet protocol (internet protocol, IP) address allocation for a terminal device, session establishment, modification, and release, and QoS control.

In a 5G communication system, the session management network element may be a session management function (session management function, SMF) network element. In a future communication system, the session management network element may still be the SMF network element, or may have another name. This is not limited in this application.

5. User plane network element: may also be referred to as a user plane function, a user plane network element, or a user plane function network element, and is for packet routing and forwarding, quality of service (quality of service, QoS) processing of user plane data, or the like.

In a 5G communication system, the user plane network element may be a user plane function (user plane function, UPF) network element. In a future communication system, the user plane network element may still be the UPF network element, or may have another name. This is not limited in this application.

The UPF is specifically classified into an intermediate-UPF (intermediate-UPF, I-UPF) and an anchor-UPF (anchor-UPF, A-UPF). The I-UPF is connected to an access network RAN. The A-UPF is a UPF of a session anchor, and the A-UPF may also be referred to as a PDU session anchor (PDU session anchor, PSA).

6. Policy control network element: is mainly for guiding a unified policy framework for network behavior, providing policy rule information for a control plane function network element (such as an AMF or an SMF), and the like.

In a 5G communication system, the policy control network element may be a policy control function (policy control function, PCF) network element. In a future communication system, the policy control network element may still be the PCF network element, or may have another name. This is not limited in this application.

7. Application network element: is for providing a service for a 3GPP network, for example, interacting with a PCF to perform policy control.

In a 5G communication system, the application network element may be an application function (application function, AF) network element. In a future communication system, the application network element may still be the AF network element, or may have another name. This is not limited in this application.

8. NSSF: is mainly for network slice selection.

9. Data management network element: is mainly for subscription data management of UE, including storage and management of a UE identifier, access authorization of the UE, and the like.

In a 5G communication system, the data management network element may be a unified data management (unified data management, UDM) network element. In a future communication system, the unified data management network element may still be the UDM network element, or may have another name. This is not limited in this application.

10. Data network: is an operator network that is mainly for providing a data service for UE, for example, the internet (Internet), a third-party service network, and an IP multimedia service (IP multimedia service, IMS) network.

In a 5G communication system, the data network may be a data network (data network, DN). In a future communication system, the data network may still be the DN, or may have another name. This is not limited in this application.

11. Authentication server network element: is mainly for user authentication and the like.

In a 5G communication system, the authentication server network element may be an authentication server function (authentication server function, AUSF) network element. In a future communication system, the authentication server network element may still be the AUSF network element, or may have another name. This is not limited in this application.

Optionally, the system architecture 100 may further include a network exposure function (network exposure function, NEF).

In the system architecture 100, an N1 interface is a reference point between the terminal device and the AMF. An N2 interface is a reference point between the (R)AN and the AMF, and is for sending a non-access stratum (non-access stratum, NAS) message and the like. An N3 interface is a reference point between the (R)AN and the I-UPF, and is for transmitting user plane data and the like. An N4 interface is a reference point between the SMF and the I-UPF, and is for transmitting information such as tunnel identification information of an N3 connection, data buffer indication information, and a downlink data notification message. An N5 interface is a reference point between the PCF and the AF. An N6 interface is a reference point between the UPF and the DN, and is for transmitting user plane data and the like. An N7 interface is a reference point between the SMF and the PCF. An N8 interface is a reference point between the AMF and the UDM. An N9 interface is a reference point between UPFs. An N10 interface is a reference point between the SMF and the UDM. An N11 interface is a reference point between the AMF and the SMF. An N12 interface is a reference point between the AMF and the AUSF. An N22 interface is a reference point between the AMF and the NSSF. An N33 interface is a reference point between an AF and an NEF.

It should be noted that names of network elements and communication interfaces between network elements in FIG. 1 are briefly described by using an example specified in a current protocol. However, this does not mean that embodiments of this application can be applied only to a currently known communication system. Therefore, a standard name that appears when a current protocol is used as an example for description is a functional description. A specific name of a network element, an interface, signaling, or the like is not limited in this application, and only indicates a function of the network element, the interface, or the signaling, and may be correspondingly extended to another system, such as a 2G, 3G, 4G, or future communication system.

It should be understood that the network architecture shown in FIG. 1 is merely an example for description, and a network architecture applicable to embodiments of this application is not limited thereto. Any network architecture that can implement functions of the foregoing network elements is applicable to embodiments of this application.

It should be further understood that the AMF, SMF, UPF, PCF, NSSF, AUSF, the UDM, and the like shown in FIG. 1 may be understood as network elements configured to implement different functions in a core network, for example, may be combined into a network slice as required. These network elements of the core network may be independent devices, or may be integrated into a same device to implement different functions. A specific form of the foregoing network elements is not limited in this application.

With rising of an intelligence wave, a requirement of a vertical industry for positioning is increasingly urgent. A positioning function of a 5G base station is introduced in the 3GPP release (Release) 16. Application scenarios of the positioning function are mainly classified into two types: a wide-area positioning scenario and a local-area positioning scenario. Typical scenarios of the wide-area scenario include a smart internet of things (for example, elderly positioning and pet tracking) and smart policing (for example, firefighter safety positioning, 110/119 alarm reporter positioning, and police vehicle positioning). Typical scenarios of the local-area positioning scenario include smart manufacturing (for example, personnel location management and material location management), smart chemical (for example, personnel location management, an electric fence, and one-click alarm reporting), and a smart shopping mall or supermarket (for example, product pushing and smart operation, customer flow analysis and shopping mall management, navigation and shopping guidance, and parking and vehicle finding).

In view of the above background, a study on enhancement to the 5G location service (Location service, LCS) (study on enhancement to the 5GC LCS) becomes a key research topic. To support the location service, the system architecture shown in FIG. 1 is extended in the 3GPP TS 23.273 protocol standard. For example, an extended architecture is shown in FIG. 2.

FIG. 2 is a diagram of another network architecture applicable to an embodiment of this application. As shown in FIG. 2, a plurality of functional network elements such as a gateway mobile location center (gateway mobile location center, GMLC), a location retrieval function (location retrieval function, LRF), a location service client (LCS client), and a location management function (location management function, LMF) are added to the system architecture, to support a location service function. An NL1 interface is a reference point between an AMF and the LMF. An NL2 interface is a reference point between the AMF and the GMLC. An NL5 interface is a reference point between an NEF and the GMLC. An NL6 interface is a reference point between a UDM and the GMLC. An Le interface is a reference point between the LCS client and the GMLC or the LRF.

In this application, the gateway mobile location center may also be referred to as a gateway mobile position center.

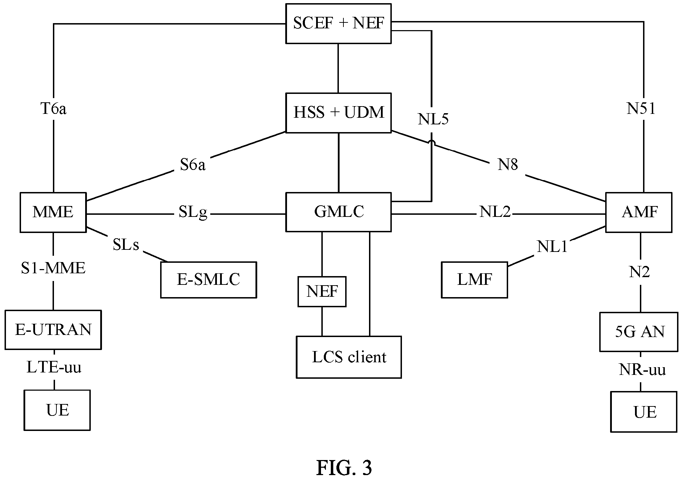

FIG. 3 is a diagram of a network architecture of interaction between 5G and 4G according to an embodiment of this application.

As shown in FIG. 3, UE may access a 5GC through a 5G AN. For example, a terminal device may access a 5G core network element AMF, so that the AMF can manage the UE. The terminal device may alternatively access a 4G evolved packet core network (evolved packet core network, EPC), for example, an access mobility management entity (mobility management entity, MME), through a 4G access network, namely, an evolved UMTS terrestrial radio access network (evolved UMTS terrestrial radio access network, E-UTRAN), so that the MME can manage the UE. In the EPC, an enhanced serving mobile location center (evolved serving mobile location center, E-SMLC) may be configured to provide, for the MME, location information of the UE managed by the MME. In the 5GC, the LMF may be configured to provide, for the AMF, location information of the UE managed by the AMF.

In addition, the wireless communication system may further include a network element integrated by a 5G core network and a 4G core network, for example, a GMLC, a network element (referred to as SCEF + NEF for short in FIG. 3) integrated by a service capability exposure function (service capability exposure function, SCEF) and a network exposure function (network exposure function, NEF), and a network element (referred to as HSS + UDM for short in FIG. 3) integrated by a home subscriber server (home subscriber server, HSS) and unified data management (unified data management, UDM). The GMLC is a network element integrated by an evolved packet core network-gateway mobile location center (evolved packet core network-gateway mobile location center, EPC-GMLC) and a 5th generation core network-gateway mobile location center (5G core network-gateway mobile location center, 5GC-GMLC).

It can be learned from FIG. 3 that interaction between the 5G network and the 4G network is implemented by using the network element (for example, the GMLC, the SCEF + NEF, and the HSS + UDM shown in FIG. 3) integrated by the 5G network and the 4G network.

It should be noted that names (for example, LTE-uu, S1-MME, SLs, SLg, S6a, T6a, N51, NL5, N8, NL2, NL1, N2 and NR-uu shown in FIG. 3) of interfaces shown in FIG. 3 are merely examples for describing interfaces between network elements, and do not constitute any limitation on the protection scope of this application. For meanings of these interface sequence numbers, refer to definitions in a standard protocol.

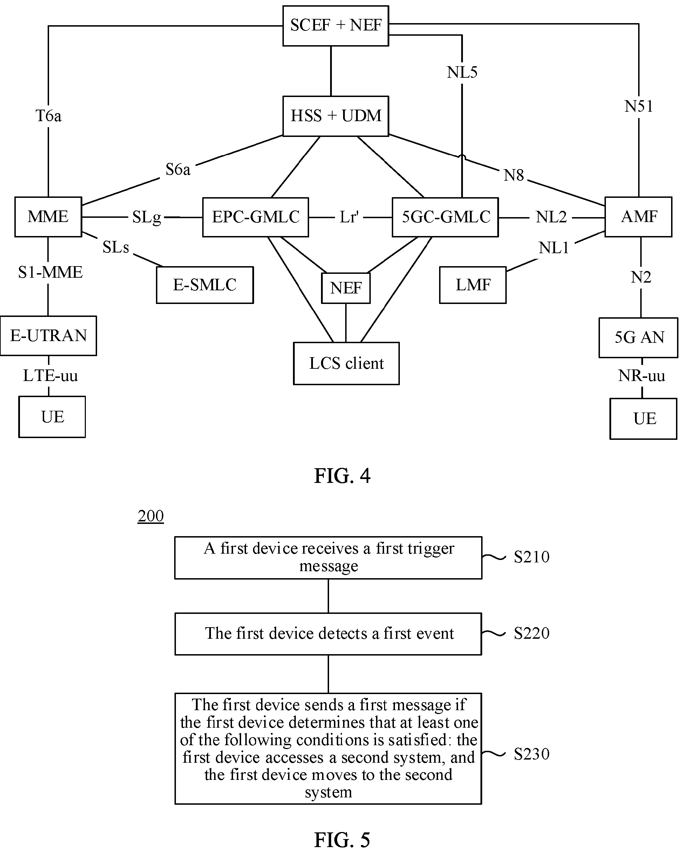

FIG. 4 is a diagram of another network architecture of interaction between 5G and 4G according to an embodiment of this application.

A difference between FIG. 4 and FIG. 3 lies in that an EPC-GMLC and a 5GC-GMLC are not co-deployed, and the EPC-GMLC and the 5GC-GMLC interact with each other through an interface Lr'.

When a terminal device is handed over between a 5G system (5G system, 5GS) and an evolved packet system (evolved packet system, EPS), due to a difference between positioning procedures in the 5GS and the EPS, if the terminal device still uses, in a system after the handover, a procedure in a system before the handover, the system after the handover cannot identify the procedure. Consequently, a location service fails.

Specifically, in a 5G positioning procedure, for example, a periodic or deferred positioning procedure, after a periodic event or a deferred event is triggered, the terminal device sends an event report (event report) message to an LMF. The event report may carry a quality of service (quality of service, QoS) class (LCS QoS class) required by the LCS. In the 5G positioning procedure, the LCS QoS class may include a best effort class (best effort class), a multiple QoS class (multiple QoS class), and an assured class (assured class). In an EPS positioning procedure, for example, a periodic or triggered positioning procedure, after a periodic event or a deferred event is triggered, the terminal device sends a location request invoke (LCS MO-LR Invoke) message to the MME. The location request invoke message may carry a QoS class required by the LCS. In the EPS positioning procedure, the QoS class may include a best effort class and an assured class.

In a scenario in which the terminal device moves from the 5GS to the EPS, if a QoS class of a location service obtained by the terminal device in the 5GS is a multiple QoS class, after the terminal device accesses the EPS, if the terminal device still uses a message type (namely, the event report message) supported by the 5GS or still uses the message type to carry the QoS class (namely, the multiple QoS class) supported only by the 5GS, the EPS cannot identify the QoS class. Consequently, a location service fails. In a scenario in which the terminal device moves from the EPS to the 5GS, after the terminal device accesses the 5GS, if the terminal device still uses a message type (namely, the location request invoke message) supported by the EPS, the 5GS cannot identify the message type. Consequently, a location service fails.

In conclusion, in the foregoing mobility handover scenario, the terminal device reports a proper message type and uses the message type to carry a proper LCS QoS class. This is critical to ensuring continuity of a location service.

In view of this, this application provides a positioning method and apparatus, so that a terminal device can report a proper message type and use the message type to carry a proper LCS QoS class in a handover scenario, to ensure continuity of a location service.

It may be understood that the term "and/or" in this specification is merely an association relationship of associated objects, and indicates that three relationships may exist. For example, A and/or B may indicate the following three cases: Only A exists, both A and B exist, and only B exists. In addition, the character "/" in this specification generally indicates an "or" relationship between the associated objects.

The foregoing briefly describes terms used in this application, and details are not described in the following embodiments. The following describes in detail, with reference to the accompanying drawings, the positioning method provided in embodiments of this application. Embodiments provided in this application may be applied to the network architecture shown in any one of FIG. 1 to FIG. 4. This is not limited.

FIG. 5 is a diagram of a positioning method 200 according to an embodiment of this application. The method 200 may include the following steps.

S210: A first device receives a first trigger message in a first system.

The first device may be a terminal device, an access network device, or a part of a terminal device or an access network device.

In an example, the first device may be a reference device (reference device), reference user equipment (reference UE), a reference node (reference node), a transmission reception point (transmission reception point, TRP), a correction device (correction device), correction user equipment (correction UE), calibration user equipment (calibration UE), a calibration device (calibration device), a reference point (reference point), a positioning reference unit (positioning reference unit, PRU), a positioning reference device (positioning reference device, PRD), a differential device (differential device), a differential unit (differential unit), a positioning differential device (positioning differential device, PDD), a positioning differential unit (positioning differential unit, PDU), a calibration point (correction point), a calibration point (calibration point), or the like. The reference node may include reference user equipment, a reference access network device, user equipment, or an access network device. The transmission reception point may include a reference transmission reception point (reference TRP). Alternatively, the positioning reference device may be user equipment and/or an access network device and/or a part of an access network device (for example, an NG-RAN, an evolved universal terrestrial radio access network (evolved universal terrestrial radio access network, E-UTRAN), a gNB, an eNB, a central unit (central unit, CU), a distributed unit (distribute unit, DU), or a transmission reception point TRP).

For ease of description, an example in which the first device is a terminal device is used for description in some embodiments of this application. However, it should be understood that the method in this application is also applicable to any one of the foregoing examples of the first device.

The first trigger message is for triggering the first device to start a periodic or deferred reporting procedure, or the first trigger message is for starting a periodic or triggered positioning event reporting procedure, or the first trigger message is for requesting the first device to start a periodic and triggered reporting procedure (start a periodic and triggered reporting procedure), or the first trigger message is for requesting the first device to report location measurement information (location measurements) and/or location estimation information (location estimate), or the first trigger message is for triggering the first device to start a location service, or the first trigger message is for starting a positioning procedure. The first trigger message may also be referred to as a first invoke message.

Specifically, the first trigger message may be a location service periodic-triggered invoke request (LCS periodic-triggered invoke request) message, a location service periodic-triggered event invoke (LCS periodic-triggered event invoke) message, a periodic-triggered invoke request (periodic-triggered invoke request) message, or a location service periodic-triggered invoke (LCS periodic-triggered invoke) message.

The first trigger message may carry information such as an identifier of a location service, a service type of a location request, and QoS (LCS QoS) of the location service. The identifier of the location service may be a location deferred request reference number (Location Deferred Request reference number, LDR reference number) or a location service correlation identifier (Location Service correlation ID, LCS correlation ID). The service type may be periodic positioning or deferred positioning. If the service type of the location request is periodic positioning, the first trigger message may further carry an interval between event reports of periodic positioning (time interval between successive location reports/interval of event reports), and may further carry a quantity of event reports (number of event reports). If the service type of the location request is deferred positioning, the first trigger message may further carry area information. The area information may be a tracking area identity (tracking area ID, TAI) and/or a cell identity (cell ID). The first message may further carry a linear distance (linear distance). The linear distance may be a straight-line distance for triggering event reporting. The QoS of the location service may also be referred to as location QoS (location QoS) or positioning QoS (positioning QoS). The QoS of the location service includes information such as horizontal accuracy (horizontal accuracy, hAccuracy), vertical accuracy (vertical accuracy, vAccuracy), response time (responseTime), and a QoS class (LCSQoSclass).

That a first device receives a first trigger message in a first system means that the first device is in the first system when receiving the first trigger message, or the first device accesses (access to) the first system when receiving the first trigger message, or the first system provides a communication service for the first device when the first device receives the first trigger message.

Specifically, the first system may be a 5th generation system (5G system, 5GS), or may be an evolved packet system (evolved packet system, EPS).

In an example, the first system is a 5th generation system. In this example, S210 in which the first device receives the first trigger message in the first system includes: The first device receives the first trigger message from a location management function network element LMF.

In another example, the first system is an evolved packet system. In this example, S210 in which the first device receives the first trigger message in the first system includes: The first device receives the first trigger message from a mobility management entity (mobility management entity, MME).

S220: The first device detects a first event.

The first event is used by the first device to report, after the first device detects that the first event is triggered, a first message related to positioning. Specifically, the first event may be any one of the following: a terminal device available event (UE available event/UE availability), a periodic event (periodic event), an area event (area event), or a motion event (motion event). The terminal device available event, the area event, and the motion event are deferred events. If an event type of a location request carried in the first trigger message is periodic positioning, the first event is a periodic event. If the event type of the location request carried in the first trigger message is deferred positioning, the first event is a deferred event. The area event includes an entering are event (entering area event), a leaving area event (leaving area event), and a being inside area event (being inside area event).

It should be understood that the area herein may be an area identified by using a tracking area identity (Tracking Area ID, TAI) and/or a cell identity (cell ID).

When the first device receives the first trigger message, the terminal device monitors occurrence or triggering of the first event. The first event may be an event carried in the first trigger message.

That the first device detects a first event (event is detected/monitored) may be replaced with any one of the following: the first device detects the first event (when event is detected/ monitored); or the first device discovers (find) that the first event is triggered (event trigger); or the first device monitors (monitor) triggering of the first event; or the first devices monitors occurrence (occurrence) of the first event; or the first device detects triggering of the first event.

S230: The first device sends a first message if the first device determines that at least one of the following conditions is satisfied: the first device accesses (access to/connected to) a second system, and the first device moves to (move to) the second system.

That the first device determines (determine) that at least one of conditions is satisfied may mean that the first device discovers (find) that the at least one of the conditions is satisfied, or may mean that the first device learns (aware/know) that the at least one of the conditions is satisfied.

That the first device accesses a second system may be understood as that the second system provides a communication service for the first device. That the first device accesses a second system may alternatively mean that the first device is handed over to (handover to) the second system; or the first device camps on (camped on) the second system; or the first device is handed over from the first system to the second system; or the first device moves from the first system to the second system; or the first device is located in the second system; or the first device is in the second system.

In this application, that the first device moves to the second system may mean that the first device is handed over to the second system; or the first device moves from the first system to the second system; or the first device is handed over from the first system to the second system; or the first device is in a process of being handed over from the first system to the second system; or the first device moves to an access network device in the second system; or the first device moves from an access network device in the first system to an access network device in the second system.

Specifically, if the first system is a 5th generation system, the second system is an evolved packet system. The access network device in the first system may be an NG-RAN, and the access network device in the second system may be an E-UTRAN. If the first system is an evolved packet system, the second system is a 5th generation system or a future communication system. The access network device in the first system may be an E-UTRAN, and the access network device in the second system may be an NG-RAN.

The first message is applicable to the second system. In other words, the first message is a message that can be identified by the second system, or the first message is a message that can be processed (can be processed) by the second system.

The first message is used by the first device to send a positioning event, or the first message is used by the first device to initiate positioning.

Specifically, if the second system is a 5th generation system, the first message is used by the first device to send the positioning event. For example, the first message is an event report (event report). If the second system is an evolved packet system, the first message is used by the first device to initiate positioning. For example, the first message is a location request invoke message initiated by a mobile device (mobile originated location request invoke, MO-LR Invoke).

In addition, the first message includes first location QoS, and the first location QoS is applicable to the second system.

In other words, the first message includes location QoS (LCS QoS/Location QoS) applicable to the second system. In this application, the location QoS applicable to the second system is referred to as the first location QoS. The first location QoS may alternatively be understood as any one of the following: location QoS applicable to (applicable to) the second system; or location QoS used for (used for) the second system; or location QoS that can be supported (can be supported) by the second system; or location QoS that can be processed (can be processed) by the second system; or location QoS that can be identified (can be understood/aware/known) by the second system.

Specifically, a QoS class included in the first location QoS may be a best effort class or an assured class.

It should be understood that a location QoS information element includes a QoS class sub-information element, and a QoS class sub-information element in the first location QoS is a best effort class or an assured class.

In this application, the location QoS (location QoS) may also be referred to as positioning QoS (positioning QoS) or location service QoS (LCS QoS).

In addition, the first message includes location information obtained by the first device, and specifically, may include location measurement information (location measurements) of the first device and/or location estimation information (location estimate) of the first device.

It should be understood that the first device may be in a non-idle state or may be in an idle state when detecting the first event. If the first device is in the non-idle state when detecting the first event, the first device may be located in the first system, or may be located in the second system.

For example, if the first device has not completed handover when detecting the first event, the first device sends the first message after completing the handover. In this case, when detecting the first event, the first device may be located in the first system, or may be located in the second system. Whether the first device is located in the first system or the second system specifically depends on a handover status of the first device.

For another example, if the first device detects the first event after the handover, the first device may send the first message. In this case, the first device is located in the second system when detecting the first event.

For another example, if the first device detects the first event in the idle state, the first device may first initiate a service request (service request, SR) procedure to return to a connected state, and send the first message in the first system or the second system. In this case, the first device is in the idle state when detecting the first event.

According to the method provided in the foregoing embodiment, the first device receives, in the first system, the first trigger message for starting a positioning procedure. If the first device detects the first event, and the first device access the second system or moves to the second system, the first device sends the first message applicable to the second system. In addition, the first message includes location QoS applicable to the second system. In this way, a device in the second system can recognize the first message and the first location QoS, so that a device in the second system can continue a location service, to maintain continuity of the location service.

In addition, according to this method, an interruption or a failure that is of the location service and that is caused because the first device is handed over from the first system to the second system can be avoided, so that a positioning delay and network resource overheads that are unnecessary are not generated.

Optionally, that the first device sends a first message if the first device moves to the second system includes: After the first device is completely handed over, the first device sends the first message.

In other words, if the first device has not moved to the second system, the first device sends the first message after the handover is completed (after handover complete).

"after the first device is completely handed over" may be replaced with any one of the following expressions: after the first device accesses the second system (after access to the 5GS/EPS); or after the first device moves to the second system (after moved to the 5GS/EPS). That the first device has not been handed over to the second system may be replaced with any one of the following expressions: The first device has not moved to the second system; or the first device has not accessed the second system.

Optionally, that the first device sends a first message includes: The first device sends the first message after a timer expires (expire). The timer may be started when the first device detects the first event, or the timer may be started when the first device receives the first trigger message.

Specifically, the first device starts the timer when detecting the first event or starts the timer when receiving the first trigger message. After the timer expires, the first device sends the first message. Optionally, if the first device has not been handed over to the second system after the timer expires, the first device may send the first message after the handover is completed.

That the timer expires (expire) may mean that the timer exceeds a time limit, or the timer reaches a time limit.

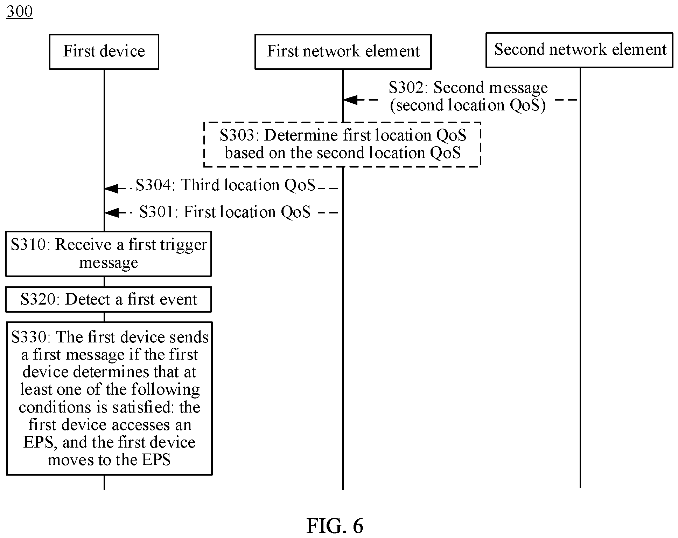

In an implementation scenario of the method 200, the first system is a 5th generation system, and the second system is an evolved packet system. The following uses FIG. 6 as an example to describe an information exchange process in this implementation scenario.

FIG. 6 is a diagram of a positioning method 300 according to an embodiment of this application. As shown in FIG. 6, the method includes the following steps.

S310: A first device receives a first trigger message in a 5th generation system 5GS.

Specifically, that a first device receives a first trigger message in a 5th generation system means that the first device receives the first trigger message from a location management function network element. The first trigger message may be first sent by the location management function network element to an access management network element, and then the access management network element sends the first trigger message to the first device.

For example, if the first device is a terminal device, when an LCS client needs to position the terminal device, the LCS client initiates a location service request, and the LCS client sends a location service request (LCS Service Request) message to a gateway mobile location center network element. If the terminal device registers with the 5GS, the gateway mobile location center network element sends a positioning information providing request (Namf_Location_ProvidePositioningInfo Request) message to the access management network element. The access management network element sends a location determining request (Nlmf_Location_DetermineLocation Request) message to the location management function network element. The location management function network element sends the first trigger message to the terminal device.

S320: The first device detects a first event.

S330: The first device sends a first message if the first device determines that at least one of the following conditions is satisfied: the first device accesses an evolved packet system, and the first device moves to the evolved packet system.

It should be understood that, for specific descriptions of S310 to S330, refer to S210 to S230. Details are not described herein again.

In the method 300, the first message is used by the first device to initiate positioning.

For example, the first message is a location request message initiated by a mobile device (Mobile Originated Location Request, MO-LR) or a location request invoke message initiated by a mobile device (Mobile Originated Location Request Invoke, MO-LR Invoke).

In the method 300, first location QoS is applicable to the evolved packet system (applicable to EPS).

According to the method provided in the foregoing embodiment, the first device receives, in the 5th generation system, the first trigger message for starting a positioning procedure. If the first device detects the first event, and the first device access the evolved packet system or moves to the evolved packet system, the first device sends the first message applicable to the evolved packet system. In addition, the first message includes location QoS applicable to the evolved packet system. In this way, a device in the evolved packet system can recognize the first message and the first location QoS, so that a device in the evolved packet system can continue a location service, to maintain continuity of the location service.

In addition, according to this method, an interruption or a failure that is of the location service and that is caused because the first device is handed over from the 5th generation system to the evolved packet system can be avoided, so that a positioning delay and network resource overheads that are unnecessary are not generated.

Optionally, the method 300 further includes: S301: A first network element sends the first location QoS to the first device. Correspondingly, the first device receives the first location QoS.

It should be understood that, that the first network element determines that an access type allowed by the first device for event reporting includes an access type of a second system may be replaced with: The first network element discovers that the access type allowed by the first device for event reporting includes the access type of the second system. In this application, "determine (determine)" may be replaced with "discover (find)".

Specifically, if the first network element determines that the access type allowed by the first device for event reporting includes the access type of the second system, the first network element sends the first location QoS to the first device.

The access type allowed by the first device for event reporting (The allowed access type for event reporting) may also be referred to as an access type supported by the first device for event reporting (The access types supported by the UE for event reporting), or may be referred to as an access type that may be used by the first device to perform event reporting, or may be referred to as an access type that may be used by the first device to perform reporting. The access type allowed by the first device for event reporting may include NR, a 5GS access type, an EPS access type, a 6th generation system (6th generation system, 6GS) access type, an E-UTRAN, a satellite (satellite), and a non-3GPP access type (for example, a wireless local area network (wireless local area network, WLAN)).

The access type of the second system may include an EPS access type (access type) or an E-UTRAN.

Specifically, the first network element may obtain/determine, in the following manner, the access type allowed by the first device for event reporting.

Manner 1: The first network element obtains, from related information of the first device, the access type allowed by the first device for event reporting. The related information of the first device may be subscription information, registration information, context information, or the like of the first device. The subscription information, the registration information, or the context information of the first device includes positioning-related information, for example, includes the access type allowed by the first device for event reporting.

The first network element may obtain the subscription information of the first device from a unified data management network element, where the subscription information includes the access type allowed by the first device for event reporting. Alternatively, the first network element may obtain the registration information or the context information of the first device from the access management network element, where the registration information or the context information includes the access type allowed by the first device for event reporting.

Optionally, the subscription information, the registration information, or the context information of the first device may alternatively be preconfigured in the first network element.

Manner 2: The first network element may obtain, from an upstream network element of the first network element, the access type allowed by the first device for event reporting.

For example, when the first network element is an NEF, the first network element may obtain, from an AF or an LCS client, the access type allowed by the first device for event reporting. For example, an event exposure subscription (Nnef_EventExposure_Subscribe) message received by the first network element includes the access type allowed by the first device for event reporting. When the first network element is a GMLC, the first network element may obtain, from an NEF, an AF, or an LCS client, the access type allowed by the first device for event reporting. For example, a location providing request (Ngmlc_Location_ProvideLocation Request) message or a location service request (LCS Service Request) message received by the GMLC includes the access type allowed by the first device for event reporting. When the first network element is an AMF, the first network element may obtain, from a GMLC, the access type allowed by the first device for event reporting. For example, a positioning information providing request (Namf_Location_ProvidePositioningInfo Request) message received by the AMF includes the access type allowed by the first device for event reporting. When the first network element is an LMF, the first network element may obtain, from an AMF, the access type allowed by the first device for event reporting. For example, a location determining request (Nlmf_Location_DetermineLocation Request) message received by the LMF includes the access type allowed by the first device for event reporting. When the first network element is an LMF, the first network element may alternatively obtain, from the first device, the access type allowed by the first device for event reporting. For example, the LMF obtains, by using a positioning message (positioning message) exchanged with the first device, the access type allowed by the first device for event reporting.

According to the foregoing solution, the first network element may provide the first location QoS for the first device, so that when the first device detects a first event for triggering reporting of an event report and the first device accesses an evolved packet system or moves to the evolved packet system, the first device may send location QoS applicable to the evolved packet system. In other words, the method can support maintaining continuity of a location service, to avoid an interruption or a failure that is of the location service and that is caused because the first device is handed over from the first system to the second system.

Specifically, the first network element may be a location management function network element, an access management network element, a gateway mobile location center network element, or a network exposure function network element.

In an example, the first network element is a location management function network element.

In this example, S301 in which the first network element sends the first location QoS to the first device includes: The location management function network element sends the first location QoS to the access management network element, and further, the access management network element sends the first location QoS to the first device.

For example, the location management function network element may carry the first location QoS when sending, to the access management network element, a message that can be identified and processed by the access management network element. For example, the message that can be identified and processed by the access network element may include an NL1 message. In other words, the NL1 message may carry the first location QoS when being sent. For example, the NL1 message may include an N1N2 message transmission (Namf_Communication_N1N2MessageTransfer) message, an N1 message (Namf_ Communication_N1MessageNotify) notification message, or an N2 information notification (Namf_Communication_N2InfoNotify) message, and carry the first location QoS by using the message.

Optionally, in this example, the method 300 further includes: The access management network element sends the first location QoS to a gateway mobile location center network element, and further, the gateway mobile location center network element may store the first location QoS.

For example, the access management network element may carry the first location QoS when sending, to the gateway mobile location center network element, a message that can be identified and processed by the gateway mobile location center network element. For example, the message that can be identified and processed by the gateway mobile location center network element may include an NL2 message. In other words, the NL2 message may carry the first location QoS when being sent. For example, the NL2 message may include a positioning event notification (Namf_Location_EventNotify) or a positioning information providing response (Namf_Location_ProvidePositioningInfo Response) message, and carry the first location QoS by using the message.

Specifically, after the first device accesses the second system, the gateway mobile location center network element may continue to perform a periodic/deferred location service by using the first location QoS, to ensure continuity of the location service.

In an example, the first network element is an access management network element.

In this example, S301 in which the first network element sends the first location QoS to the first device is that the access management network element sends the first location QoS to the first device.

Optionally, in this example, the method 300 further includes: The access management network element sends the first location QoS to a gateway mobile location center network element, and further, the gateway mobile location center network element stores the first location QoS.

In an example, the first network element is a gateway mobile location center network element.

In this example, S301 in which the first network element sends the first location QoS to the first device includes: The gateway mobile location center network element sends the first location QoS to an access management network element, and further the access management network element sends the first location QoS to the first device.

Optionally, in this example, the method 300 further includes: The gateway mobile location center network element stores the first location QoS.

In an example, the first network element is a network exposure function network element.

In this example, S301 in which the first network element sends the first location QoS to the first device includes: The network exposure function network element sends the first location QoS to a gateway mobile location center network element. Further, the gateway mobile location center network element sends the first location QoS to an access management network element. Further, the access management network element sends the first location QoS to the first device.

Specifically, the network exposure function network element may carry the first location QoS when sending, to the gateway mobile location center network element, a message that can be identified and processed by the gateway mobile location center network element. For example, the message that can be identified and processed by the gateway mobile location center network element may include an NL5 message. In other words, the NL5 message may carry the first location QoS when being sent. For example, the NL5 message may include a location providing request (Ngmlc_Location_ProvideLocation Request) message, and carry the first location QoS by using the message. The gateway mobile location center network element may carry the first location QoS when sending, to the access management network element, a message that can be identified and processed by the access management network element. For example, the message that can be identified and processed by the access management network element may include an NL2 message. In other words, the NL2 message may carry the first location QoS when being sent. For example, the NL2 message may include a positioning information providing request (Namf_Location_ProvidePositioningInfo Request) message, and carry the first location QoS by using the message.

Optionally, in this example, the method 300 further includes: The gateway mobile location center network element stores the first location QoS.

Optionally, in any one of the foregoing examples, the location management function network element (LMF) may carry the first location QoS by using the first trigger message when sending the first trigger message to the first device. In other words, S310 and S301 may be performed simultaneously.

For descriptions of the first trigger message, refer to S210.

Optionally, in any one of the foregoing examples, that the access management network element sends the first location QoS to the first device includes: The access management network element sends the first location QoS to a first access network device, so that the first access network device sends the first location QoS to the first device.

The first access network device may be referred to as an access network device in a 5th generation system. For example, the first access network device is an NG-RAN.

In the method 300, the first access network device is an access network device in the first system.

Optionally, before S301, the method 300 further includes S302: A second network element sends a second message to the first network element. Correspondingly, the first network element receives the second message.

The second message is for requesting a location of the first device.

In an example, the second network element is an application network element AF.

In this example, the first network element may be a network exposure function network element.

For example, if the application network element initiates a location service request, the application network element sends an event exposure subscription (Nnef_EventExposure_Subscribe) message to the network exposure function network element, where the message is for requesting the location of the first device. The network exposure function network element may perform S301. In this case, the second message is an event exposure subscription (Nnef_EventExposure_Subscribe) message.

The event exposure subscription (Nnef_EventExposure_Subscribe) message may include information such as identification information of the first device, a service type of a location request, a total quantity of times of reporting a positioning event report, and QoS (LCS QoS) of a location service.

In this example, the first network element may alternatively be a gateway mobile location center network element.

For example, the network exposure function network element does not perform S301, but sends a location providing request (Ngmlc_Location_ProvideLocation Request) message to the gateway mobile location center network element, where the message is for requesting the location of the first device. Further, the gateway mobile location center network element performs S301. In this case, the second message is a location providing request (Ngmlc_Location_ProvideLocation Request) message.

The location providing request (Ngmlc_Location_ProvideLocation Request) message may include information in an event exposure subscription (Nnef_EventExposure_Subscribe) message.

In this example, the first network element may be an access management network element.

For example, neither the network exposure function network element nor the gateway mobile location center network element performs S301, but the gateway mobile location center network element sends a positioning information providing request (Namf_Location_ProvidePositioningInfo Request) message to the access management network element, where the message is for requesting the location of the first device. Further, the access management network element may perform S301. In this case, the second message is a positioning information providing request (Namf_Location_ProvidePositioningInfo Request) message.

The positioning information providing request (Namf_Location_ProvidePositioningInfo Request) message may include information in a location providing request (Ngmlc_Location_ProvideLocation Request) message. In addition, the positioning information providing request (Namf_Location_ProvidePositioningInfo Request) message may further carry a location deferred request (Location Deferred Request, LDR) reference number (LDR Reference number). The LDR reference number may be for identifying a periodic location service request that is for UE and that is between the GMLC and the AMF.

In this example, the first network element may alternatively be a location management function network element.

For example, none of the network exposure function network element, the gateway mobile location center network element, and the access management network element performs S301, but the access management network element sends a location determining request (Nlmf_Location_DetermineLocation Request) message to the location management function network element, where the message is for requesting location information of the first device. Further, the location management function network element may perform S301. In this case, the second message is a location determining request (Nlmf_Location_DetermineLocation Request) message.

The location determining request (Nlmf_Location_DetermineLocation Request) message may include information in a positioning information providing request (Namf_Location_ProvidePositioningInfo Request) message. In addition, the second message may further include an LCS association identifier, and the LCS association identifier is for identifying a periodic location service that is of UE and that is between the AMF and the LMF.

In another example, the second network element is an LCS client.

In this example, the first network element may be a gateway mobile location center network element.

For example, if the LCS client initiates a location service request, the LCS client sends a location service request (LCS Service Request) message to the gateway mobile location center network element, where the message is for requesting location information of the first device. Further, the gateway mobile location center network element may perform S301.

In this example, the first network element may be an access management network element.

For example, the gateway mobile location center network element does not perform S301, but sends a positioning information providing request (Namf_Location_ProvidePositioningInfo Request) message to the access management network element, where the message is for requesting the location of the first device. Further, the access management network element may perform S301. In this case, the second message is a positioning information providing request (Namf_Location_ProvidePositioningInfo Request) message.

The positioning information providing request (Namf_Location_ProvidePositioningInfo Request) message may include information in a location service request (LCS Service Request) message. In addition, the positioning information providing request (Namf_Location_ProvidePositioningInfo Request) message may further carry a location deferred request (Location Deferred Request, LDR) reference number (LDR Reference number). The LDR reference number may be for identifying a periodic location service request that is for UE and that is between the GMLC and the AMF.

In this example, the first network element may alternatively be a location management function network element.

For example, neither the gateway mobile location center network element nor the access management network element performs S301, but the access management network element sends a location determining request (Nlmf_Location_DetermineLocation Request) message to the location management function network element, where the message is for requesting location information of the first device. Further, the location management function network element may perform S301. In this case, the second message is a location determining request (Nlmf_Location_DetermineLocation Request) message.

The location determining request (Nlmf_Location_DetermineLocation Request) message may include information in a positioning information providing request (Namf_Location_ProvidePositioningInfo Request) message. In addition, the second message may further include an LCS association identifier, and the LCS association identifier is for identifying a periodic location service that is of UE and that is between the AMF and the LMF.

Optionally, in an implementation of the method 300, the second message includes the first location QoS. To be specific, the second message includes location QoS applicable to the evolved packet system. For example, a QoS class of the first location QoS included in the second message may be a best effort class or an assured class.

Based on the solution of the foregoing implementation, the second message may include the first location QoS applicable to the evolved packet system, and the first network element may directly send the first location QoS to the first device. When the first device detects the first event for triggering reporting of an event report, and the first device accesses the evolved packet system or moves to the evolved packet system, the first device may send the first message applicable to the evolved packet system to carry the first location QoS. In this way, a device in the evolved packet system can identify the first message and the first location QoS, so that the device in the evolved packet system can continue a location service, to maintain continuity of the location service.

It should be understood that, in this application, the first location QoS may be understood as being applicable to both the 5th generation system and the evolved packet system.

Optionally, in another implementation of the method 300, the second message includes second location QoS, where the second location QoS includes a multiple QoS class (multiple QoS class).

In other words, the second location QoS is applicable to the 5th generation system, and is not applicable to the evolved packet system.

In this case, the first location QoS corresponds to the second location QoS.

That the first location QoS corresponds to the second location QoS may mean that the first location QoS is determined by using the second location QoS; or the first location QoS is mapped by the second location QoS; or the first location QoS is determined based on the second location QoS; or the first location QoS is generated based on the second location QoS; or the first location QoS is determined based on the second location QoS; or the first location QoS is mapped based on the second location QoS; or the location QoS applicable to the evolved packet system is determined based on the second location QoS; or location QoS that is not applicable to the evolved packet system is converted to the location QoS that is applicable to the evolved packet system.

Based on the solution of the foregoing implementation, the second message may include the second location QoS that is not applicable to the evolved packet system. In this case, the first network element may determine, based on the second location QoS, the first location QoS that is applicable to the evolved packet system, and send the first location QoS to the first device. In this way, a device in the evolved packet system can identify the first message and the first location QoS, so that the device in the evolved packet system can continue a location service, to maintain continuity of the location service.

Optionally, in this implementation, the method 300 further includes S303: The first network element determines the first location QoS based on the second location QoS.

Specifically, the first network element may select horizontal accuracy (hAccuracy) and vertical accuracy (vAccuracy) from the second location QoS, and set a QoS class of the first location QoS to a best effort class (set to/as best effort) or an assured class (set to/as assured).

It should be understood that, because a QoS class included in the second location QoS is the multiple QoS class, the second location QoS may include a plurality of groups of precision, where each group includes horizontal precision and vertical precision. Highest precision may be understood as precision with a highest priority in one or more groups of precision. Lowest precision may be understood as precision with a lowest priority in one or more groups of precision. Medium (medium) precision may be understood as precision with a medium priority in one or more groups of precision.

It should be understood that, in this application, a priority of precision may be understood as a strictness degree of the precision. Precision with a highest priority may be understood as precision whose priority ranks at the top or precision that has a most stringent (most stringent) requirement. For example, a higher/larger priority value indicates a higher priority. Alternatively, a lower/smaller priority value indicates a higher priority. Alternatively, a priority ranking at the top indicates a highest priority. Alternatively, a priority ranking at the bottom indicates a highest priority. Alternatively, preferred (preferred) precision is used as precision with a highest priority. Precision whose priority ranks at the bottom may be understood as precision whose priority ranks the last, precision that has a least stringent requirement, or precision that has a lowest requirement. For example, a higher/larger priority value indicates a lower priority. Alternatively, a lower/smaller priority value indicates a lower priority. Alternatively, a priority ranking at the top indicates a lowest priority. Alternatively, a priority ranking at the bottom indicates a lowest priority. Alternatively, not preferred (not preferred) precision is used as precision with a lowest priority. Precision with a medium priority may be understood as precision whose priority ranks in the middle, or precision that has a requirement between a most stringent requirement and a lowest requirement, for example, stringent or low precision.

In an implementation, that the first network element determines the first location QoS based on the second location QoS includes: The first network element selects, based on a priority of precision, one of the plurality of groups of precision as precision of the class of the first location QoS, and setting the QoS class of the first location QoS to a best effort class or an assured class.

For example, the step may be implemented in the following manners.

Manner 1: The first network element selects horizontal accuracy and vertical accuracy that have highest priorities from the second location QoS, and sets the QoS class of the first location QoS to a best effort class.

Manner 2: The first network element selects horizontal accuracy and vertical accuracy that have lowest priorities from the second location QoS, and sets the QoS class of the first location QoS to an assured class.

Manner 3: The first network element selects horizontal accuracy and vertical accuracy that have medium priorities from the second location QoS, and sets the QoS class of the first location QoS to an assured class or a best effort class.

Manner 4: The first network element selects horizontal accuracy and vertical accuracy that are preferred (preferred) from the second location QoS, and sets the QoS class of the first location QoS to an assured class or a best effort class.

In another implementation, that the first network element determines the first location QoS based on the second location QoS includes: The first network element randomly or freely selects horizontal accuracy and vertical accuracy from the second location QoS, and sets a QoS class of the first location QoS to an assured class or a best effort class.

Optionally, the method 300 further includes S304: The first network element sends third location QoS to the first device. Correspondingly, the first device receives the third location QoS.

The third location QoS is applicable to the first system. "The third location QoS is applicable to the first system" may be understood as any one of the following: The third location QoS is location QoS applicable to (applicable to) the first system; or the third location QoS is location QoS used for (used for) the first system; or the third location QoS is location QoS that can be supported (can be supported) by the first system; or the third location QoS is location QoS that can be processed (can be processed) by the first system; or the third location QoS is location QoS that can be identified (can be understood/aware) by the first system.

Specifically, the third location QoS may include a QoS class in the second location QoS.

In an example, the third location QoS is the same as the second location QoS.

In another example, the third location QoS includes only a part of information in the second location QoS.

For example, the second location QoS includes horizontal accuracy, vertical accuracy, feedback time, and a QoS class, and the third location QoS includes the horizontal accuracy, the vertical accuracy, and the QoS class. That is, the third location QoS does not include information about the feedback time in the second location QoS.

According to the foregoing solution, the first network element may send, to the first device, location QoS applicable to the 5th generation system and location QoS applicable to the evolved packet system. When the first device is handed over between the 5th generation system and the evolved packet system, the first device may select, based on a type of a system to which the first device is handed over, to report a message and location QoS that are applicable to the corresponding system. In this way, continuity of a location service in a continuous handover scenario can be supported.

For a specific method in which the first network element sends the third location QoS to the first device, refer to S301. Details are not described herein again.

It should be understood that S304 and S301 may be performed simultaneously. For example, the first network element sends the first location QoS and the third location QoS to the first device by using a same message. In this case, both the first location QoS and the third location QoS may be carried in the first trigger message delivered by the location management network element. That is, when receiving the first trigger message, the first device receives the first location QoS and the third location QoS.

Optionally, S304 and S301 may not be performed simultaneously. In this case, a sequence of S304 and S301 is not limited in this application.

Optionally, the method 300 further includes: The access management network element obtains third information, where the third information indicates that the first device is handed over from the 5GS to the EPS.

That the third information indicates that the first device is handed over from the 5GS to the EPS may mean that the third information indicates that a target access technology is an evolved universal terrestrial radio access network (E-UTRAN); or the third information is for commanding handover of the first device from NR to an E-UTRAN/EPC (The MobilityFromNRCommand message is used to command handover from NR to E-UTRAN/EPC); or the third information indicates that the first device is handed over from the first system to the second system; or the third information indicates that the first device moves from the first system to the second system; or the third information indicates that the first device is handed over to the second system; or the third information indicates that the first device moves to the second system; or the third information indicates to hand over to the second system.

For example, the third information may be that a value of a target access technology type (targetRAT-Type) includes E-UTRAN (targetRAT-Type="eutran"). Alternatively, the third information may be MobilityFromNRCommand. Alternatively, the third information may be RRC reconfiguration.

In this application, "indicate (indicate)" may be understood as "represent (represent)" or "notify (notify)".

Specifically, the access management network element may obtain the third information from the mobility management entity. For example, the third information may be carried in a relocation response message (Relocation response) sent by the mobility management entity to the access management network element.

It should be understood that, when the first device is handed over from the 5GS to the EPS, a second access network device sends the third information to the mobility management entity, and then the mobility management entity sends the third information to the access management network element.

The second access network device may be referred to as an access network device in the evolved packet system. For example, the second access network device is an E-UTRAN.

In the method 300, the second access network device is an access network device in the second system.

Optionally, the method 300 further includes: The first device receives first information, where the first information indicates that the first device moves to the second system.

For example, the first information may be from the access management network element, the mobility management entity, or the second access network device (E-UTRAN).

The first information may be the same as the third information. For example, when the first device is handed over from the 5GS to the EPS, the second access network device sends the third information to the mobility management entity, and then the mobility management entity sends the third information to the access management network element. After obtaining the third information, the access management network element may send the third information to the first device.

The first information may be different from the third information. For example, when the first device is handed over from the 5GS to the EPS, the second access network device sends the third information to the mobility management entity, and then the mobility management entity sends the third information to the access management network element. After obtaining the third information, the access management network element may process the third information, to obtain the first information, and send the first information to the first device. Optionally, the mobility management entity may alternatively process the third information to obtain the first information. In this case, the mobility management entity sends the first information to the access management network element.

In other words, in the method 300, the first information obtained by the first device may be from the access management network element, the mobility management entity, or the second access network device.

Specifically, the access management network element may send the first information to the first device via the first access network device.

The first access network device may be referred to as an access network device in the 5th generation system. For example, the first access network device is an NG-RAN.

Optionally, the method 300 further includes: The access management network element sends second information to the gateway mobile location center network element, where the second information indicates that the first device moves to the second system.

Specifically, after receiving a handover requirement (handover required) from the first access network device, or after receiving a relocation response (Relocation response) from the mobility management entity, or after receiving a relocation complete notification (Relocation complete notification) message from the mobility management entity, the access management network element may send the second information to the gateway mobile location center network element by using a location event notification (Namf_Location_EventNotify)_ or a positioning information providing response (Namf_Location_ProvidePositioningInfo Response) message. The second information may be a handover indication/notification (handover indication/notification). Alternatively, the second information may be a handover complete indication/notification (handover complete notification/indication).

Further, the gateway mobile location center network element may learn, based on the second information, that the first device moves to the evolved packet system. Subsequently, the gateway mobile location center network element may continue a periodic/triggered location service in the evolved packet system, and may indicate the 5th generation system to release a resource related to the periodic/triggered location service.

Optionally, the location event notification message may include identification information of the mobility management entity in the evolved packet system. The identification information of the mobility management entity may be a name (MME name) of the mobility management entity, an address (MME address) of the mobility management entity, or an identifier (MME ID) of the mobility management entity.

Optionally, when determining that the first device has positioning information, the access management network element may send the second information to the gateway mobile location center network element.

The positioning information is information that includes positioning in related information of the first device. The related information of the first device may be context information of the first device, subscription information of the first device, or registration information of the first device. The information that includes positioning may be related information including a location service, for example, identification information related to the location service. The identification information may be an LCS correlation ID or an LDR reference number. For another example, the related information including the location service may further include QoS information of the location service, a type (for example, a periodic location service or a deferred location service) of the location service, or the like.

It should be understood that, in the method 300, an example in which the first system is the 5th generation system is used for description. It should be understood that the first system may alternatively be a 6GS. In other words, the solution in this embodiment of this application is applicable to a scenario of handover between the EPS and the 6GS.

It should be further understood that the method 300 is described by using an example in which the EPC-GMLC and the 5GC-GMLC are co-deployed. However, the positioning method in this application is also applicable to the scenario in which the EPC-GMLC and the 5GC-GMLC are not co-deployed in FIG. 4. In the scenario in which the EPC-GMLC and the 5GC-GMLC are not co-deployed, the GMLC in the method 300 may be understood as the 5GC-GMLC, and the 5GC-GMLC may send information such as the first location QoS, the second information, the LDR reference number, and the identifier of the mobility management entity to the EPC-GMLC. In this way, when the GMLCs are separately deployed, continuity of a location service in the scenario of handover between the 5GS and the EPS can be ensured, and a positioning delay is reduced.

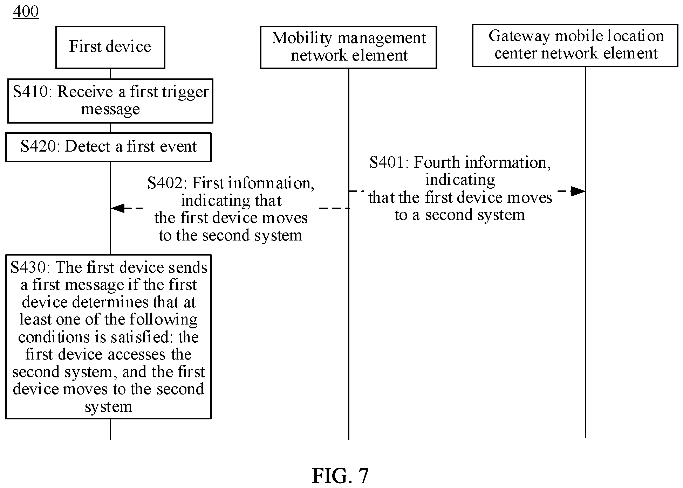

In another implementation scenario of the method 200, the first system is an evolved packet system, and the second system is a 5th generation system. The following uses FIG. 7 as an example to describe an information exchange process in this implementation scenario.

FIG. 7 is a diagram of a positioning method 400 according to an embodiment of this application. As shown in FIG. 7, the method includes the following steps.

S410: A first device receives a first trigger message in an evolved packet system.

Specifically, that a first device receives a first trigger message in an evolved packet system may mean that the first device receives the first trigger message from a mobility management entity.

For example, if the first device is a terminal device, when an LCS client needs to position the terminal device, the LCS client initiates a location service request, and the LCS client sends a location service request (LCS Service Request) message to a gateway mobile location center network element. If the terminal device registers with the EPS, the gateway mobile location center network element sends a user location providing (Provide Subscriber Location) message to the mobility management entity, and then the mobility management entity sends the first trigger message to the terminal device.

S420: The first device detects a first event.

S430: The first device sends a first message if the first device determines that at least one of the following conditions is satisfied: the first device accesses a 5th generation system, the first device is being handed over to the 5th generation system, the first device has been handed over to the 5th generation system, the first device has moved to the 5th generation system, or the first device moves to the 5th generation system.

In the method 400, the first message is used by the first device to send a positioning event. Alternatively, the first message is used by the first device to report a periodic or triggered positioning event.

In an example, the first message is an event report (event report).

In the method 400, first location QoS is applicable to the 5th generation system (applicable to 5GS).

For example, the first location QoS may be from the mobility management entity, and is sent to the first device by using the first trigger message.

It should be understood that, for specific descriptions of S410 to S430, refer to S210 to S230. Details are not described herein again.

According to the method provided in the foregoing embodiment, the first device receives, in the evolved packet system, the first trigger message for starting a positioning procedure. If the first device detects the first event, and the first device access the 5th generation system or moves to the 5th generation system, the first device sends the first message applicable to the 5th generation system. In this way, a device in the 5th generation system can recognize the first message, so that a device in the 5th generation system can continue a location service, to maintain continuity of the location service. In other words, according to this method, an interruption or a failure that is of the location service and that is caused because the first device is handed over from the evolved packet system to the 5th generation system can be avoided, so that a positioning delay and network resource overheads that are unnecessary are not generated.

Optionally, the method 400 further includes S401: The mobility management entity sends fourth information to the gateway mobile location center network element if the mobility management entity determines that at least one of the following conditions is satisfied: the first device accesses a second system, and the first device moves to the second system. Correspondingly, the gateway mobile location center network element receives the fourth information.

Specifically, "the mobility management entity sends fourth information to the gateway mobile location center network element if the mobility management entity determines that at least one of the following conditions is satisfied: the first device accesses a second system, and the first device moves to the second system" may be understood as that the mobility management entity sends the fourth information to the gateway mobile location center network element after receiving a forward relocation response (Forward Relocation Response) from an access management network element, or receiving a forward relocation complete notification (Forward Relocation Complete Notification) message from an access management network element, or receiving a handover requirement (Handover Required) from an E-UTRAN.

The fourth information indicates that the first device moves to the second system, and the fourth information may be a handover indication/notification (handover notification/indication). Alternatively, the fourth information may be a handover complete indication/notification (handover complete notification/indication).

The second system may be the 5th generation system.

Specifically, the fourth information may be carried in a user location report (Subscriber Location Report) message.

Specifically, the mobility management entity may send the fourth information to the gateway mobile location center network element when determining that the first device has positioning information.

The positioning information is information that includes positioning in related information of the first device. The related information of the first device may be context information of the first device, subscription information of the first device, or registration information of the first device. The information that includes positioning may be related information including a location service, for example, identification information related to the location service. The identification information may be an LCS correlation ID or an LDR reference number. For another example, the related information including the location service may further include QoS information of the location service, a type (for example, a periodic location service or a deferred location service) of the location service, or the like.

Further, the gateway mobile location center network element may learn, based on the fourth information, that the first device moves to the 5th generation system. Subsequently, the gateway mobile location center network element may continue a periodic/triggered location service in the 5th generation system, and may indicate the evolved packet system to release a resource related to the periodic/triggered location service.

In an example, that the mobility management entity sends fourth information to a gateway mobile location center network element includes: The mobility management entity sends the fourth information to the gateway mobile location center network element after the mobility management entity receives a handover requirement (handover required).

In another example, that the mobility management entity sends fourth information to a gateway mobile location center network element includes: The mobility management entity sends the fourth information to the gateway mobile location center network element after receiving a forward relocation response (Forward Relocation Response) from an access management network element, or receiving a forward relocation complete notification (Forward Relocation Complete Notification) message from an access management network element.

Optionally, the user location report message may further include identification information of an access management network element in the 5th generation system. The identification information of the access management network element may be a network function entity identifier (NF instance ID) of the access management network element, an IP address of the access management network element, or a full qualified domain name (Full Qualified Domain Name, FQDN) of the access management network element.

Optionally, in S401, "if the mobility management entity determines that at least one of the following conditions is satisfied: the first device accesses a second system, and the first device moves to the second system" may be understood as that the mobility management entity sends the fourth information to the gateway mobile location center network element after receiving a forward relocation response (Forward Relocation Response) from an access management network element, or receiving a forward relocation complete notification (Forward Relocation Complete Notification) message from an access management network element, or receiving a handover requirement (Handover Required) from an E-UTRAN.

Specifically, if the first device moves to the 5th generation system, the mobility management entity receives the forward relocation response message from the access management network element, where the forward relocation response message carries a radio resource control (radio resource control, RRC) reconfiguration message (RRCReconfiguration) of a first access network device. In this way, the mobility management entity learns that the first device moves to the 5th generation system. Fifth information may be the RRC reconfiguration message.

The first access network device may be referred to as an access network device in the 5th generation system. For example, the first access network device is an NG-RAN.

In the method 400, the first access network device is an access network device in the second system.

Optionally, the method 400 further includes S402: The mobility management entity sends first information to the first device, where the first information indicates that the first device moves to the second system.

The first information may be the same as the fifth information. For example, when the first device is handed over from the EPS to the 5GS, the first access network device sends the fifth information to the access management network element, and then the access management network element sends the fifth information to the mobility management entity. After obtaining the fifth information, the mobility management entity may send the fifth information to the first device.

The first information may be different from the third information. For example, when the first device is handed over from the EPS to the 5GS, the first access network device sends the fifth information to the access management network element, and then the access management network element sends the fifth information to the mobility management entity. After obtaining the fifth information, the mobility management entity may process the fifth information to obtain the first information, and send the first information to the first device.

In other words, in the method 400, the first information obtained by the first device may be from the access management network element, the mobility management entity, or the first access network device.

Specifically, the mobility management entity may send the first information to the first device via the second access network device.

The second access network device may be referred to as an access network device in the evolved packet system. For example, the second access network device is an E-UTRAN.

It should be understood that, in the method 400, an example in which the second system is the 5th generation system is used for description. It should be understood that the second system may alternatively be a 6GS. In other words, the solution in this embodiment of this application is applicable to a scenario of handover between the EPS and the 6GS.

It should be further understood that the method 400 is described by using an example in which the EPC-GMLC and the 5GC-GMLC are co-deployed. However, the positioning method in this application is also applicable to the scenario in which the EPC-GMLC and the 5GC-GMLC are not co-deployed in FIG. 4. In the scenario in which the EPC-GMLC and the 5GC-GMLC are not co-deployed, the GMLC in the method 400 may be understood as the EPC-GMLC, and the EPC-GMLC may send information such as the fourth information, the LDR reference number, and the identifier of the access management network element to the 5GC-GMLC. In this way, when the GMLCs are separately deployed, continuity of a location service in the scenario of handover between the 5GS and the EPS can be ensured, and a positioning delay is reduced.

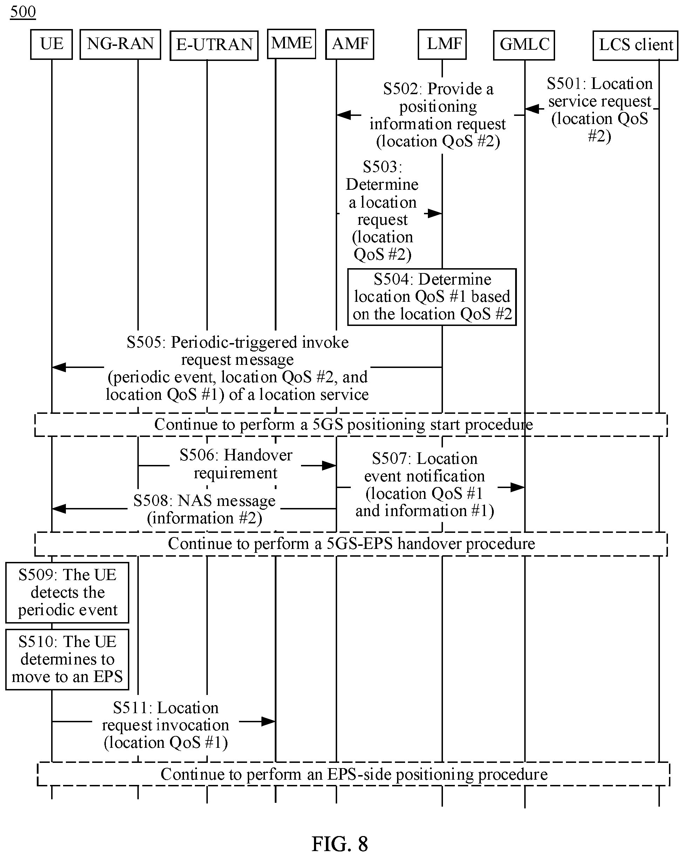

For ease of understanding, the following uses the network architecture shown in FIG. 3 as an example to describe the methods in the foregoing embodiments with reference to FIG. 8 to FIG. 12.

FIG. 8 is a diagram of a positioning method 500 according to an embodiment of this application. For example, the method 500 shown in FIG. 8 may be considered as a specific implementation of the method 200 and the method 300. The method 500 may include the following steps.

S501: An LCS client sends a location service request message to a GMLC.

If the LCS client initiates a location service request, the LCS client sends the location service request (LCS Service Request) message to the GMLC, where the message is for requesting a location of UE.

The location service request message may carry location QoS #2.

For example, a QoS class included in the location QoS #2 is a multiple QoS class. In this case, the location QoS #2 is an example of the second location QoS.

S502: The GMLC sends a positioning information providing request message to an AMF.

The positioning information providing request message is for requesting the location of the UE, and the message may carry information in the location service request message.

S503: The AMF sends a location determining request message (an example of the second message) to an LMF.

The location determining request message is for requesting the location of the UE, and the message may carry information in the location service request message.

S504: The LMF determines location QoS #1 (an example of the first location QoS) based on the location QoS #2.

If the QoS class included in the location QoS #2 is the multiple QoS class, the LMF may determine the location QoS #1 (an example of the first location QoS) based on the location QoS #2. The location QoS #1 includes a group of horizontal precision and vertical precision in the location QoS #2, and a QoS class included in the location QoS #1 is a best effort class or an assured class.

S505: The LMF sends a periodic-triggered invoke request message (an example of the first trigger message) of a location service to the UE.

The periodic-triggered invoke request message of the location service is used by the UE to start a periodic positioning reporting procedure. The message carries a periodic positioning event (an example of the first event). If the UE detects that the periodic positioning event is triggered, the UE may report location information obtained by the UE. The location information may include location calculation or location estimation information obtained by the UE through measurement by the UE.

The periodic-triggered invoke request message of the location service further includes the location QoS #1 and the location QoS #2 (an example of the third location QoS).

It should be understood that the location QoS #2 is applicable to a 5GS, and the location QoS #1 is applicable to an EPS.

Network elements such as the UE, the AMF, the LMF, and the GMLC may continue to perform an EPS positioning start procedure.

S506: An NG-RAN sends a handover requirement to the AMF.

For a condition that the NG-RAN sends the handover requirement to the AMF, refer to an existing handover procedure, for example, the 3GPP protocol 23.502.

S507: The AMF sends a location event notification message to the GMLC.

Optionally, the AMF may alternatively send the location event notification message to the GMLC after receiving a Relocation Response or a Relocation Complete Notification.

If the LMF obtains the location QoS #1, when the LMF sends the periodic-triggered invoke request message of the location service to the UE, the AMF may obtain the location QoS #1.

If the AMF determines that positioning information of the UE exists, and the UE moves to the EPS, the UE is being handed over to the EPS, or the UE has been handed over to the EPS, the AMF may send the location event notification message to the GMLC, and add information #1 (an example of the second information) to the location event notification message. The information #1 indicates that the UE is being handed over to the EPS or has been handed over to the EPS.

In addition, the location event notification message further includes the location QoS #1.

S508: The AMF sends a non-access stratum (Non-access stratum, NAS) message to the UE.

The NAS message includes information #2 (an example of the first information). The information #2 indicates that the UE is being handed over to the EPS, the UE has been handed over to the EPS, or handover is completed.

Network elements such as the UE, the NG-RAN, the AMF, an E-UTRAN, and an MME may continue to perform a handover procedure of the UE from the 5GS to the EPS.

S509: The UE detects a periodic event.

For example, time for triggering the periodic event is reached, so that the UE detects the periodic event.

S510: The UE determines that the UE moves to the EPS.

For example, the UE is being handed over, or the UE has been handed over, and the UE learns, based on the information #2, that a system after the handover is the EPS.

S511: The UE sends a location request invoke message to the MME.

The location request invoke message includes the location QoS #1.

Next, the MME may identify the location request invoke message and the location QoS#1, and continue a positioning procedure on an EPS side with another network element.

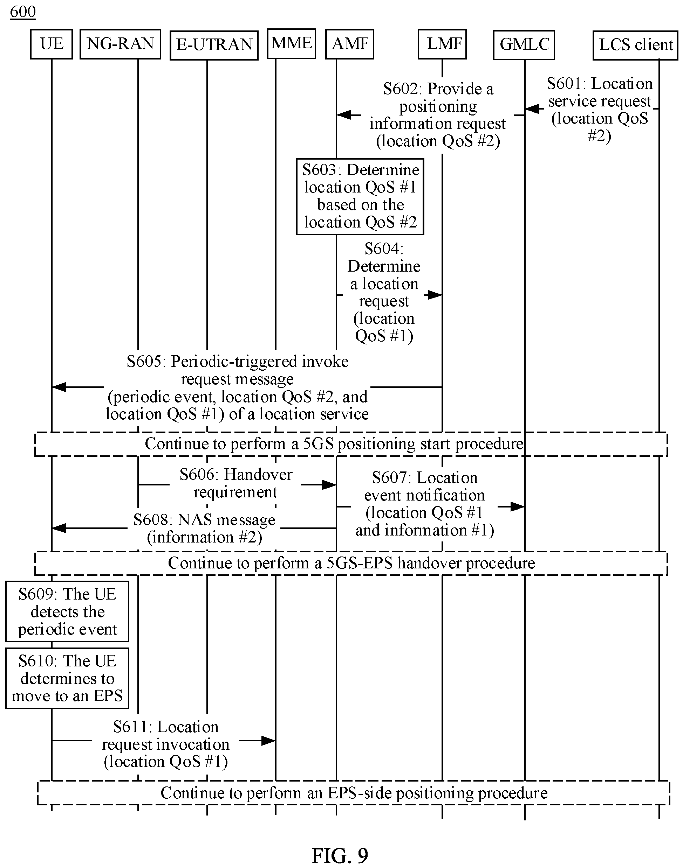

FIG. 9 is a diagram of a positioning method 600 according to an embodiment of this application. For example, the method 600 shown in FIG. 9 may be considered as a specific implementation of the method 200 and the method 300. The method 600 may include the following steps.

For S601 and S602, refer to S501 and S502.

S603: The AMF determines location QoS #1 (an example of the first location QoS) based on the location QoS #2.

If the QoS class included in the location QoS #2 is the multiple QoS class, the AMF may determine the location QoS #1 (an example of the first location QoS) based on the location QoS #2. The location QoS #1 includes a group of horizontal precision and vertical precision in the location QoS #2, and a QoS class included in the location QoS #1 is a best effort class or an assured class.

S604: The AMF sends a location determining request message to an LMF.

The location determining request message is for requesting the location of the UE, and the message may carry information in the location service request message.

The message further includes location QoS#1.

S605: The LMF sends a periodic-triggered invoke request message (an example of the first trigger message) of a location service to the UE.

Refer to S505.

Network elements such as the UE, the AMF, the LMF, and the GMLC may continue to perform an EPS positioning start procedure.

S606: An NG-RAN sends a handover requirement to the AMF.

S607: The AMF sends a location event notification message to the GMLC.

Optionally, the AMF may alternatively send the location event notification message to the GMLC after receiving a Relocation Response or a Relocation Complete Notification.

S608: The AMF sends a non-access stratum (Non-access stratum, NAS) message to the UE.

For a specific process of S606 to S608, refer to S506 to S508.

Network elements such as the UE, the NG-RAN, the AMF, an E-UTRAN, and an MME may continue to perform handover of the UE from the 5GS to the EPS.

S609: The UE detects a periodic event.

S610: The UE determines that the UE moves to the EPS.

S611: The UE sends a location request invoke message to the MME.

For a specific process of S609 to S611, refer to S509 to S511.

Next, the MME may identify the location request invoke message and the location QoS#1, and continue a positioning procedure on an EPS side with another network element.

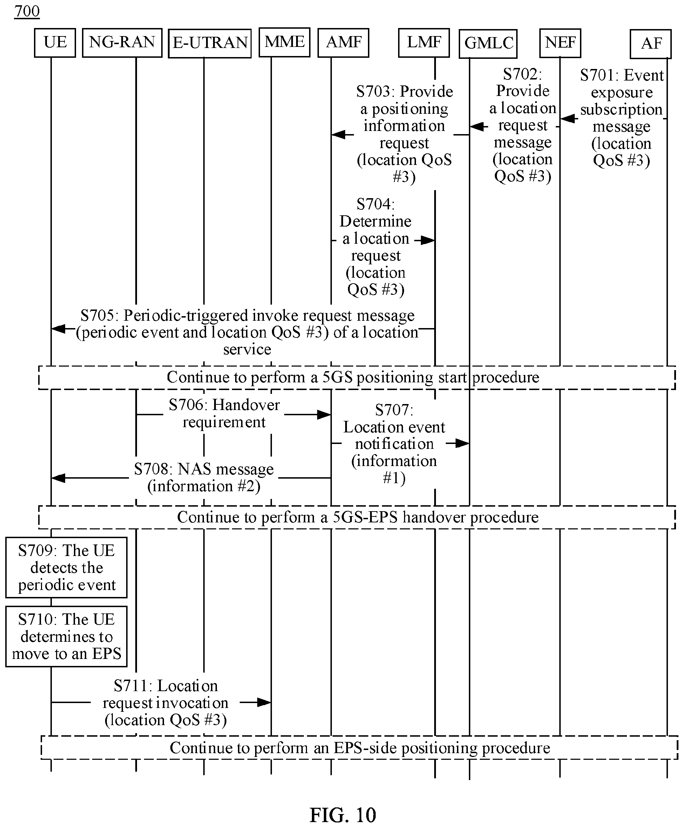

FIG. 10 is a diagram of a positioning method 700 according to an embodiment of this application. For example, the method 700 shown in FIG. 10 may be considered as a specific implementation of the method 200 and the method 300. The method 700 may include the following steps.

S701: An AF sends an event exposure subscription message to an NEF.

If the AF initiates a location service request, the AF sends the event exposure subscription (Nnef_EventExposure_Subscribe) message to the NEF.

The event exposure subscription message may carry location QoS #3. For example, a QoS class included in the location QoS #3 is a best effort class or an assured class. In this case, the location QoS #3 is an example of the first location QoS.

S702: The NEF sends a location providing request (Ngmlc_Location_ProvideLocation Request) message (an example of the second message) to a GMLC, where the message is for requesting a location of UE.

The location providing request message may carry the location QoS #3.

S703: The GMLC sends a positioning information providing request message to an AMF.

The positioning information providing request message is for requesting the location of the UE, and the message may carry information in the location providing request message.

It should be understood that, because the GMLC determines that the location QoS #3 does not include a multiple QoS class, after receiving the location providing request message, the GMLC may directly send the positioning information request message to the AMF. If the GMLC determines that location QoS in the location providing request message includes a multiple QoS class, the GMLC needs to first determine location QoS applicable to an EPS, and then sends the positioning information request message to the AMF. The message carries the location QoS that is determined by the GMLC and that is applicable to the EPS.

S704: The AMF sends a location determining request message to an LMF.

The location determining request message is for requesting the location of the UE, and the message may carry information in the location service request message.

S705: The LMF sends a periodic-triggered invoke request message (an example of the first trigger message) of a location service to the UE.

The periodic-triggered invoke request message of the location service is used by the UE to start a periodic positioning reporting procedure. The message carries a periodic event (an example of the first event) and the location QoS #3.

The location QoS #3 is applicable to both the 5GS and the EPS.

Network elements such as the UE, the AMF, the LMF, and the GMLC may continue to perform an EPS positioning start procedure.

S706: An NG-RAN sends a handover requirement to the AMF.

S707: The AMF sends a location event notification message to the GMLC.

Optionally, the AMF may alternatively send the location event notification message to the GMLC after receiving a Relocation Response or a Relocation Complete Notification.

If the AMF determines that positioning information of the UE exists, and the UE moves to or is handed over to the EPS, the AMF may send the location event notification message to the GMLC, and add information #1 (an example of the second information) to the location event notification message. The information #1 indicates that the UE is being handed over to the EPS, the UE has been handed over to the EPS, or handover is completed.

S708: The AMF sends a non-access stratum (Non-access stratum, NAS) message to the UE.

For a specific process of S706 to S708, refer to S506 to S508.

Network elements such as the UE, the NG-RAN, the AMF, an E-UTRAN, and an MME may continue to perform handover of the UE from the 5GS to the EPS.

S709: The UE detects a periodic event.

S710: The UE determines that the UE moves to the EPS.

S711: The UE sends a location request invoke message to the MME.

For a specific process of S709 to S711, refer to S509 to S511.

Next, the MME may identify the location request invoke message, and continue a positioning procedure on an EPS side with another network element.

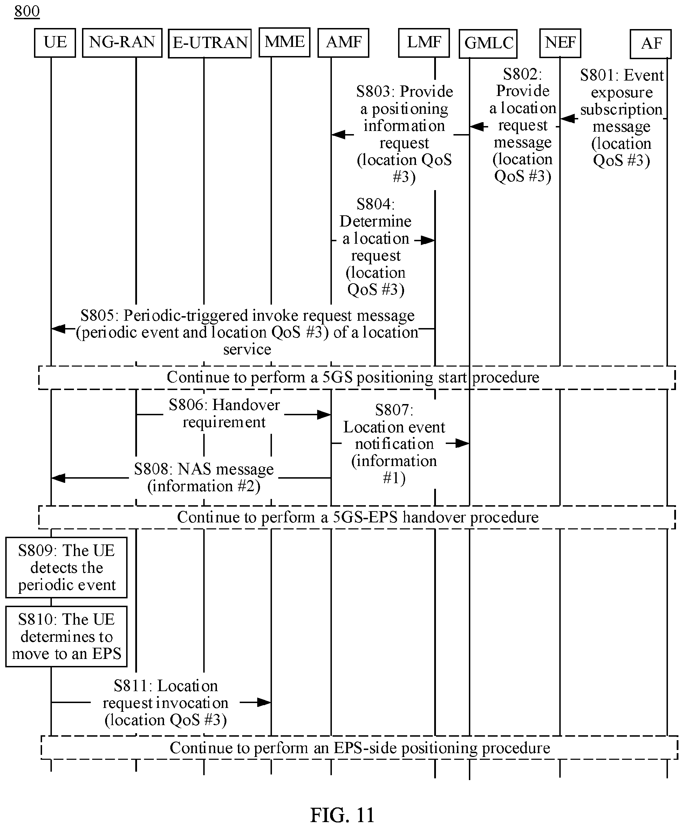

FIG. 11 is a diagram of a positioning method 800 according to an embodiment of this application. For example, the method 800 shown in FIG. 11 may be considered as a specific implementation of the method 200 and the method 300. The method 800 may include the following steps.

S801: An AF sends an event exposure subscription message to an NEF.

For a specific process of S801, refer to S701.

S802: The NEF sends a location providing request (Ngmlc _Location_ProvideLocation Request) message (an example of the second message) to a GMLC, where the message is for requesting a location of UE.

The location providing request message may carry the location QoS #3.

It should be understood that, because the NEF determines that the location QoS #3 does not include a multiple QoS class, after receiving the event exposure subscription message, the NEF directly sends the location providing request message to the GMLC. If the NEF determines that location QoS in the event exposure subscription message includes a multiple QoS class, the NEF needs to first determine location QoS applicable to an EPS, and then sends the location providing request message to the GMLC. The message carries the location QoS that is determined by the GMLC and that is applicable to the EPS.

S803: The GMLC sends a positioning information providing request message to an AMF.

The positioning information providing request message is for requesting the location of the UE, and the message may carry information in the location providing request message.

S804: The AMF sends a location determining request message to an LMF.

The location determining request message is for requesting the location of the UE, and the message may carry information in the location service request message.

S805: The LMF sends a periodic-triggered invoke request message (an example of the first trigger message) of a location service to the UE.

The periodic-triggered invoke request message of the location service is used by the UE to start a periodic location information reporting procedure. The message carries a periodic event (an example of the first event) and the location QoS #3.

The location QoS #3 is applicable to both the 5GS and the EPS.

Network elements such as the UE, the AMF, the LMF, and the GMLC may continue to perform an EPS positioning start procedure.

S806: An NG-RAN sends a handover requirement to the AMF.

S807: The AMF sends a location event notification message to the GMLC.

Optionally, the AMF may alternatively send the location event notification message to the GMLC after receiving a Relocation Response or a Relocation Complete Notification.

S808: The AMF sends a non-access stratum (Non-access stratum, NAS) message to the UE.

For a specific process of S806 to S808, refer to S706 to S708.

Network elements such as the UE, the NG-RAN, the AMF, an E-UTRAN, and an MME may continue to perform handover of the UE from the 5GS to the EPS.

S809: The UE detects a periodic event.

S810: The UE determines that the UE moves to the EPS.

S811: The UE sends a location request invoke message to the MME.

For a specific process of S809 to S811, refer to S709 to S711.

Next, the MME may identify the location request invoke message, and continue a positioning procedure on an EPS side with another network element.

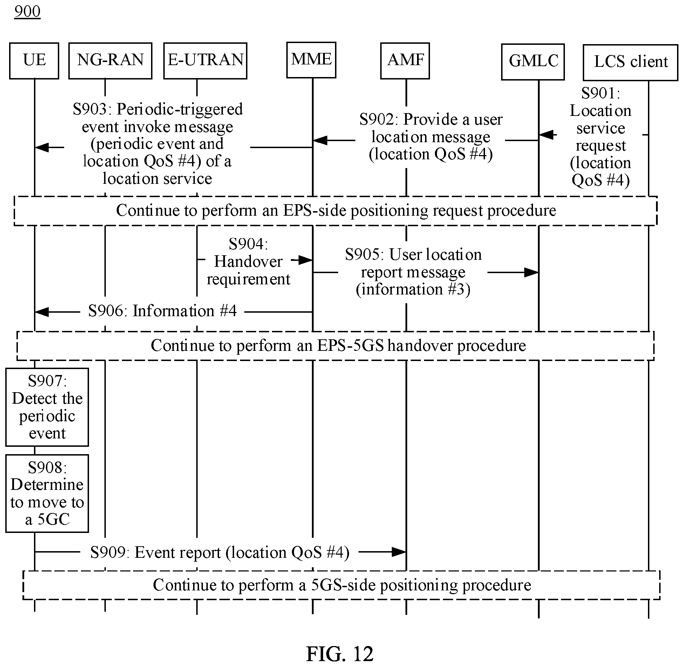

FIG. 12 is a diagram of a positioning method 900 according to an embodiment of this application. For example, the method 900 shown in FIG. 12 may be considered as a specific implementation of the method 200 and the method 400. The method 900 may include the following steps.

S901: An LCS client sends a location service request message to a GMLC.

If the LCS client initiates a location service request, the LCS client sends a location service request (LCS Service Request) message to the GMLC, where the message is for requesting a location of UE.

The location service request message may carry location QoS #4.

A QoS class included in the location QoS #4 is a best effort class or an assured class, and the location QoS #4 is an example of the first location QoS.

The location QoS #4 is applicable to both the 5GS and the EPS.

S902: The GMLC sends a user location providing (Provide Subscriber Location) message to an MME.

The user location providing message is for requesting the location of the UE, and the message may carry information in the location service request message.

S903: The MME sends a periodic-triggered event invoke message (an example of the first trigger message) of a location service to the UE.

The periodic-triggered event invoke message of the location service is used by the UE to start a positioning procedure. The message carries a periodic event (an example of the first event). If the UE detects that the periodic event is triggered, the UE may report location information obtained by the UE. The location information may include location calculation or location estimation information obtained by the UE through measurement by the UE.

The periodic-triggered event invoke message of the location service further includes the location QoS#4.

Network elements such as the UE, the MME, and the GMLC may continue to perform an EPS positioning start procedure.

S904: An E-UTRAN sends a handover requirement to the MME.

For a condition that the E-UTRAN sends the handover requirement to the MME, refer to an existing handover procedure, for example, the 3GPP protocol 23.502.

S905: The MME sends a user location report (Subscriber Location Report) message to the GMLC.

Optionally, the MME may alternatively send the user location report message to the GMLC after receiving a forward relocation response (Forward Relocation Response) or a forward relocation complete notification (Forward Relocation Complete Notification).

The user location report message includes information #3 (an example of the fourth information). The information #3 indicates that the UE is being handed over to the 5GS, the UE has been handed over to the 5GS, or handover is completed.

S906: The MME sends information #4 (another example of the first information) to the UE, where the information #4 indicates that the UE moves to the 5GS.

Network elements such as the UE, the NG-RAN, the AMF, the E-UTRAN, and the MME may continue to perform a handover procedure of the UE from the EPS to the 5GS.

S907: The UE detects a periodic event.

For example, trigger time of the periodic event is reached, so that the UE detects the periodic event.

S908: The UE determines that the UE moves to the 5GS.

For example, the UE is being handed over, or the UE has been handed over, and the UE learns, based on the information #4, that a system after the handover is the 5GS.

S909: The UE sends an event report (event report) to the AMF.

The event report includes the location QoS #4.

Next, the AMF may identify the event report, and continue a positioning procedure on a 5GS side with another network element.

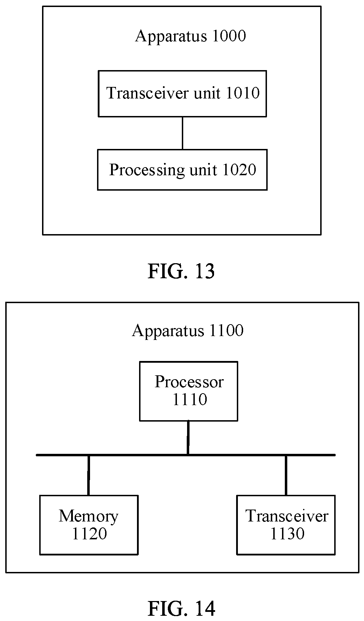

FIG. 13 is a diagram of a positioning apparatus 1000 according to an embodiment of this application.

The apparatus 1000 includes a transceiver unit 1010 and a processing unit 1020. The transceiver unit 1010 may be configured to implement a corresponding communication function. The transceiver unit 1010 may also be referred to as a communication interface or a communication unit. The processing unit 1020 may be configured to process data.

Optionally, the apparatus 1000 further includes a storage unit. The storage unit may be configured to store instructions and/or data. The processing unit 1020 may read the instructions and/or the data in the storage unit, to enable the apparatus to implement actions of different devices in the foregoing method embodiments, for example, actions of the first device, the first network element, or the mobility management entity.

In an example, the apparatus 1000 is configured to perform actions performed by the first device in the foregoing method embodiments, and the apparatus 1000 may include units configured to perform the methods performed by the first device in the foregoing method embodiments.

In this case, the apparatus 1000 may be the first device or a component of the first device. The transceiver unit 1010 is configured to perform operations related to receiving and sending on a first device side or a UE side in the foregoing method embodiments. The processing unit 1020 is configured to perform operations related to processing on the first device side or the UE side in the foregoing method embodiments.

Specifically, the transceiver unit 1010 is configured to receive a first trigger message in a first system, where the first trigger message is for requesting the first device to start a positioning procedure. The processing unit 1020 is configured to detect a first event, and send a first message if determining that at least one of the following conditions is satisfied: the first device accesses a second system, and the first device moves to the second system. The first message is used by the first device to send a positioning event or initiate positioning. The first message includes first location QoS. The first location QoS is applicable to the second system.

Optionally, the first system is a 5th generation system, and the second system is an evolved packet system. The first message is a location request message or a location request invoke message initiated by a mobile device.

Optionally, the first location QoS corresponds to second location QoS, and the second location QoS includes a multiple QoS class.

Optionally, the transceiver unit 1010 is further configured to receive the first location QoS from a first network element. The first network element is a location management function network element, an access management network element, a gateway mobile location center network element, or a network exposure function network element.

Optionally, the transceiver unit 1010 is further configured to receive third location QoS from the first network element, where the third location QoS is applicable to the first system.

Optionally, the third location QoS includes a QoS class in the second location QoS, or the third location QoS includes horizontal accuracy and vertical accuracy in the second location QoS.

Optionally, the first system is an evolved packet system, and the second system is a 5th generation system. The first message is used by the first device to report a periodic or triggered positioning event.

Optionally, the first message is an event report.

Optionally, the first location QoS is carried in the first trigger message.

Optionally, the first trigger message is a periodic-triggered invoke request message or a periodic-triggered event invoke message.

Optionally, the transceiver unit 1010 is further configured to obtain first information, where the first information indicates that the first device moves to the second system.

Optionally, the first information is from an access management network element or a mobility management entity, or from an access network device in the second system.

Optionally, the first location QoS includes a best effort class or an assured class.

Optionally, the processing unit 1020 is specifically configured to send a first message after the first device is completely handed over.

The apparatus 1000 may implement steps or procedures that correspond to the first device in the method embodiments of this application.

It should be understood that a specific process in which the units perform the foregoing corresponding steps is described in detail in the foregoing method embodiments. For brevity, details are not described herein.

In another example, the apparatus 1000 is configured to perform actions performed by the first network element in the foregoing method embodiments, and the apparatus 1000 may include units configured to perform the methods performed by the first network element in the foregoing method embodiments.

In this case, the apparatus 1000 may be the first network element or a component of the first network element. The transceiver unit 1010 is configured to perform operations related to receiving and sending on a first network element side in the foregoing method embodiments. The processing unit 1020 is configured to perform operations related to processing on the first network element side in the foregoing method embodiments.

Specifically, the transceiver unit 1010 is configured to receive a second message. The second message is for requesting a location of a first device, the second message includes second location QoS, the second location QoS includes a multiple QoS class, and the first network element belongs to a first system. The processing unit 1020 is configured to: if determining that an access type allowed by the first device for event reporting includes an access type of a second system, send first location QoS to the first device. The first location QoS is applicable to the second system, and the first location QoS corresponds to the second location QoS.

Optionally, the first network element is a location management function network element. The processing unit 1020 is specifically configured to send the first location QoS to an access management network element.

Optionally, the first network element is an access management network element. The processing unit 1020 is specifically configured to send the first location QoS to an access network device in the first system.

Optionally, the transceiver unit 1010 is further configured to send the first location QoS to a gateway mobile location center network element.

Optionally, the transceiver unit 1010 is further configured to send first information to the first device, where the first information indicates that the first device moves to the second system; and/or send second information to the gateway mobile location center network element, where the second information indicates that the first device moves to the second system.

Optionally, the transceiver unit 1010 is further configured to obtain third information, where the third information indicates that the first device is handed over from the first system to the second system.

Optionally, the first network element is a network exposure function network element. The processing unit 1020 is specifically configured to send the first location QoS to a gateway mobile location center network element.

Optionally, the first network element is a gateway mobile location center network element. The processing unit 1020 is specifically configured to send the first location QoS to an access management network element.

Optionally, the processing unit 1020 is further configured to store the first location QoS.

Optionally, the transceiver unit 1010 is further configured to send third location QoS to the first device, where the third location QoS is applicable to the first system.

Optionally, the third location QoS includes a QoS class in the second location QoS, or the third location QoS includes horizontal accuracy and vertical accuracy in the second location QoS.

Optionally, the processing unit 1020 is further configured to determine the first location QoS based on the second location QoS.

Optionally, the processing unit 1020 is specifically configured to select horizontal accuracy and vertical accuracy from the second location QoS, and set a QoS class of the first location QoS to a QoS class applicable to the second system.

Optionally, the processing unit 1020 is specifically configured to select horizontal accuracy and vertical accuracy that have highest priorities from the second location QoS, and set the QoS class of the first location QoS to a best effort class; or select horizontal accuracy and vertical accuracy that have lowest priorities from the second location QoS, and set the QoS class of the first location QoS to an assured class.

The apparatus 1000 may implement steps or procedures that correspond to the first network element in the method embodiments of this application.

It should be understood that a specific process in which the units perform the foregoing corresponding steps is described in detail in the foregoing method embodiments. For brevity, details are not described herein.

In an example, the apparatus 1000 is configured to perform actions performed by the mobility management entity in the foregoing method embodiments, and the apparatus 1000 may include units configured to perform the methods performed by the mobility management entity in the foregoing method embodiments.

In this case, the apparatus 1000 may be the mobility management entity or a component of the mobility management entity. The transceiver unit 1010 is configured to perform operations related to receiving and sending on a mobility management entity side or an MME side in the foregoing method embodiments. The processing unit 1020 is configured to perform operations related to processing on the mobility management entity side or the MME side in the foregoing method embodiments.

Specifically, the processing unit 1020 is configured to determine that a first device has positioning information. The processing unit 1020 is further configured to send fourth information to a gateway mobile location center network element if the mobility management entity determines that at least one of the following conditions is satisfied: the first device accesses a second system, and the first device moves to the second system. The fourth information indicates that the first device moves to the second system.

Optionally, the transceiver unit 1010 is configured to send first information to the first device, where the first information indicates that the first device moves to the second system.

Optionally, the processing unit 1020 is specifically configured to: when receiving a forward relocation complete notification message, send the fourth information to the gateway mobile location center network element.

The apparatus 1000 may implement steps or procedures that correspond to the mobility management entity in the method embodiments in embodiments of this application.

It should be further understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 1000 in each of the foregoing solutions has a function of implementing a corresponding step performed by the first device in the foregoing method, or the apparatus 1000 in each of the foregoing solutions has a function of implementing a corresponding step performed by the first network element in the foregoing method, or the apparatus 1000 in each of the foregoing solutions has a function of implementing a corresponding step performed by the mobility management entity in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, the sending unit in the transceiver unit may be replaced by a transmitter, and the receiving unit in the transceiver unit may be replaced by a receiver). Another unit, such as a processing unit, may be replaced by a processor to separately perform a sending and receiving operation and a related processing operation in each method embodiment.

In addition, the transceiver unit 1010 may alternatively be a transceiver circuit (for example, may include a receiving circuit and a sending circuit), and the processing unit may be a processing circuit.

It should be noted that the apparatus in FIG. 13 may be the network element or the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 14 is a diagram of a positioning apparatus 1100 according to an embodiment of this application. The apparatus 1100 includes a processor 1110. The processor 1110 is coupled to the memory 1120. The memory 1120 is configured to store a computer program or instructions and/or data. The processor 1110 is configured to execute the computer program or the instructions stored in the memory 1120, or read the data stored in the memory 1120, to perform the methods in the foregoing method embodiments. As shown in FIG. 11, the apparatus 1100 further includes a transceiver 1130. The transceiver 1130 is configured to receive and/or send a signal. For example, the processor 1110 is configured to control the transceiver 1130 to receive and/or send a signal.

Optionally, there are one or more processors 1110.

Optionally, there are one or more memories 1120.

Optionally, the memory 1120 and the processor 1110 are integrated together, or are disposed separately.

In a solution, the apparatus 1100 is configured to implement operations performed by the first device, the first network element, or the mobility management entity in the foregoing method embodiments.

For example, the processor 1110 is configured to execute the computer program or the instructions stored in the memory 1120, to implement related operations of the first device in the foregoing method embodiments, for example, the methods performed by the first device in embodiments shown in FIG. 5 to FIG. 7, or the method performed by the UE in any one of embodiments shown in FIG. 8 to FIG. 12.

For another example, the processor 1110 is configured to execute the computer program or the instructions stored in the memory 1120, to implement related operations of the first network element in the foregoing method embodiments, for example, the method performed by the first network element in the embodiment shown in FIG. 6, or the method performed by the AMF, the LMF, the GMLC, or the NEF in any one of embodiments shown in FIG. 8 to FIG. 11.

For another example, the processor 1110 is configured to execute the computer program or the instructions stored in the memory 1120, to implement related operations of the mobility management entity in the foregoing method embodiments, for example, the method performed by the mobility management entity in the embodiment shown in FIG. 7, or the method performed by the MME in the embodiment shown in FIG. 12.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other suitable type of memory.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

This application further provides a communication system, including the access management network element and the gateway mobile location center network element in the foregoing embodiments, or including the mobility management entity and the gateway mobile location center network element in the foregoing embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the word "example" or "for example" is used to represent giving an example, an illustration, or descriptions. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method, comprising:
receiving, by a first device, a first trigger message in a first system, wherein the first trigger message is for requesting the first device to start a periodic or deferred reporting procedure;
detecting, by the first device, a first event; and
sending, by the first device, a first message if the first device determines that at least one of the following conditions is satisfied: the first device accesses a second system, and the first device moves to the second system, wherein
the first message is used by the first device to send a positioning event or initiate positioning, the first message comprises first location QoS, and the first location QoS is applicable to the second system.

2. The method according to claim 1, wherein the first system is a 5th generation system, the second system is an evolved packet system, and the first message is a location request message or a location request invoke message initiated by a mobile device.

3. The method according to claim 2, wherein the first location QoS corresponds to second location QoS, and the second location QoS comprises a multiple QoS class.

4. The method according to claim 2 or 3, wherein the method further comprises:
receiving, by the first device, the first location QoS from a first network element, wherein the first network element is a location management function network element, an access management network element, a gateway mobile location center network element, or a network exposure function network element.

5. The method according to claim 4, wherein the method further comprises:
receiving, by the first device, third location QoS from the first network element, wherein the third location QoS is applicable to the first system.

6. The method according to claim 5, wherein the third location QoS comprises a QoS class in the second location QoS, or the third location QoS comprises horizontal accuracy and vertical accuracy in the second location QoS.

7. The method according to any one of claims 1 to 6, wherein the first location QoS is carried in the first trigger message.

8. The method according to claim 7, wherein the first trigger message is a periodic-triggered invoke request message or a periodic-triggered event invoke message.

9. The method according to claim 1, wherein the first system is an evolved packet system, the second system is a 5th generation system, and the first message is used by the first device to send the positioning event.

10. The method according to claim 9, wherein the first message is an event report.

11. The method according to any one of claims 1 to 10, wherein the method further comprises:
obtaining, by the first device, first information, wherein the first information indicates that the first device moves to the second system.

12. The method according to claim 11, wherein the first information is from an access management network element or a mobility management entity, or from an access network device in the second system.

13. The method according to any one of claims 1 to 12, wherein the first location QoS comprises a best effort class or an assured class.

14. The method according to any one of claims 1 to 13, wherein the sending, by the first device, a first message if the first device moves to the second system comprises:
after the first device is completely handed over, sending, by the first device, the first message.

15. A positioning method, comprising:
receiving, by a first network element, a second message, wherein the second message is for requesting a location of a first device, the second message comprises second location QoS, the second location QoS comprises a multiple QoS class, and the first network element belongs to a first system; and
if the first network element determines that an access type allowed by the first device for event reporting comprises an access type of a second system, sending, by the first network element, first location QoS to the first device, wherein the first location QoS is applicable to the second system, and the first location QoS corresponds to the second location QoS.

16. The method according to claim 15, wherein the first network element is a location management function network element, and the sending, by the first network element, first location QoS to the first device comprises:
sending, by the location management function network element, the first location QoS to an access management network element; and
sending, by the access management network element, the first location QoS to the first device.

17. The method according to claim 15, wherein the first network element is an access management network element, and the sending, by the first network element, first location QoS to the first device comprises:
sending, by the access management network element, the first location QoS to an access network device in the first system; and
sending, by the access network device in the first system, the first location QoS to the first device.

18. The method according to claim 17, wherein the method further comprises:
sending, by the access management network element, the first location QoS to a gateway mobile location center network element.

19. The method according to claim 17 or 18, wherein the method further comprises:
sending, by the access management network element, first information to the first device, wherein the first information indicates that the first device moves to the second system; and/or
sending, by the access management network element, second information to the gateway mobile location center network element, wherein the second information indicates that the first device moves to the second system.

20. The method according to any one of claims 17 to 19, wherein the method further comprises:
obtaining, by the access management network element, third information, wherein the third information indicates that the first device is handed over from the first system to the second system.

21. The method according to claim 15, wherein the first network element is a network exposure function network element, and the sending, by the first network element, first location QoS to the first device comprises:
sending, by the network exposure function network element, the first location QoS to a gateway mobile location center network element; and
sending, by the gateway mobile location center network element, the first location QoS to an access management network element, to enable the access management network element to send the first location QoS to the first device.

22. The method according to claim 15, wherein the first network element is a gateway mobile location center network element, and the sending, by the first network element, first location QoS to the first device comprises:
sending, by the gateway mobile location center network element, the first location QoS to an access management network element; and
sending, by the access management network element, the first location QoS to the first device.

23. The method according to claim 22, wherein the method further comprises:
storing, by the gateway mobile location center network element, the first location QoS.

24. The method according to any one of claims 14 to 23, wherein the method further comprises:
sending, by the first network element, third location QoS to the first device, wherein the third location QoS is applicable to the first system.

25. The method according to claim 24, wherein the third location QoS comprises a QoS class in the second location QoS, or the third location QoS comprises horizontal accuracy and vertical accuracy in the second location QoS.

26. The method according to any one of claims 15 to 25, wherein the method further comprises:
determining, by the first network element, the first location QoS based on the second location QoS.

27. The method according to claim 26, wherein the determining, by the first network element, the first location QoS based on the second location QoS comprises:
selecting, by the first network element, horizontal accuracy and vertical accuracy from the second location QoS, and setting a QoS class of the first location QoS to a QoS class applicable to the second system.

28. The method according to claim 27, wherein the QoS class applicable to the second system comprises a best effort class or an assured class.

29. The method according to either of claims 26 and 27, wherein the determining, by the first network element, the first location QoS based on the second location QoS comprises:
selecting, by the first network element, horizontal accuracy and vertical accuracy that have highest priorities from the second location QoS, and setting the QoS class of the first location QoS to a best effort class; or
selecting, by the first network element, horizontal accuracy and vertical accuracy that have lowest priorities from the second location QoS, and setting the QoS class of the first location QoS to an assured class.

30. A positioning method, comprising:
determining, by a mobility management entity, that a first device has positioning information; and
sending, by the mobility management entity, fourth information to a gateway mobile location center network element if the mobility management entity determines that at least one of the following conditions is satisfied: the first device accesses a second system, and the first device moves to the second system, wherein the fourth information indicates that the first device moves to the second system.

31. The method according to claim 30, wherein the method further comprises:
sending, by the mobility management entity, first information to the first device, wherein the first information indicates that the first device moves to the second system.

32. The method according to claim 30 or 31, wherein the sending, by the mobility management entity, fourth information to a gateway mobile location center network element if the first device moves to the second system comprises:
when the mobility management entity receives a forward relocation complete notification message, sending, by the mobility management entity, the fourth information to the gateway mobile location center network element.

33. A positioning apparatus, comprising a unit configured to implement the method according to any one of claims 1 to 14, the method according to any one of claims 15 to 29, or the method according to any one of claims 30 to 32.

34. A positioning apparatus, comprising:
a processor, configured to execute a computer program stored in a memory, to enable the apparatus to perform the method according to any one of claims 1 to 14, the method according to any one of claims 15 to 29, or the method according to any one of claims 30 to 32.

35. The apparatus according to claim 34, wherein the apparatus further comprises the memory.

36. A computer-readable storage medium, wherein the computer-readable storage medium stores a computer program, and when the computer program is run on a computer, the computer is enabled to perform the method according to any one of claims 1 to 14, the method according to any one of claims 15 to 29, or the method according to any one of claims 30 to 32.

37. A computer program product, wherein the computer program product comprises instructions for performing the method according to any one of claims 1 to 14, the method according to any one of claims 15 to 29, or the method according to any one of claims 30 to 32.
